(19) Europäisches Patentamt
European Patent Office
Office européen des brevets

(11) EP 1 947 129 B1

# (12) EUROPEAN PATENT SPECIFICATION

(45) Date of publication and mention of the grant of the patent:
**10.12.2014 Bulletin 2014/50**

(21) Application number: **06798239.7**

(22) Date of filing: **22.09.2006**

(51) Int Cl.:
***C08G 59/40*** (2006.01) ***C08F 20/00*** (2006.01)
***C08F 290/04*** (2006.01) ***C08G 65/18*** (2006.01)

(86) International application number:
**PCT/JP2006/318851**

(87) International publication number:
**WO 2007/034914 (29.03.2007 Gazette 2007/13)**

## (54) PHOTORADICAL- AND PHOTOCATION-CURABLE COMPOSITION

PHOTORADIKAL- UND PHOTOKATIONENHÄRTBARE ZUSAMMENSETZUNG

COMPOSITION À POLYMÉRISATION PHOTORADICALAIRE ET PHOTOCATIONIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.09.2005 JP 2005276948**

(43) Date of publication of application:
**23.07.2008 Bulletin 2008/30**

(73) Proprietor: **KANEKA CORPORATION**
**Osaka (JP)**

(72) Inventors:
- **OGAWA, Kohei**
**Settsu-shi**
**Osaka 566-0072 (JP)**
- **NAKAGAWA, Yoshiki**
**Settsu-shi**
**Osaka 566-0072 (JP)**

(74) Representative: **Hart-Davis, Jason et al**
**Cabinet Beau de Loménie**
**158, rue de l'Université**
**75340 Paris Cedex 07 (FR)**

(56) References cited:
**EP-A1- 1 059 308**
**WO-A1-2004/106400**
**JP-A- 10 120 996**
**JP-A- 11 140 388**
**JP-A- 2000 072 816**
**JP-A- 2000 095 826**
**JP-A- 2001 089 639**
**JP-A- 2006 265 483**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The present invention relates to a photoradical- and photocation-curable composition improved in curability.

### BACKGROUND ART

An epoxy resin has been used in a wide range of industrial fields covering automobiles, vehicles, aircrafts, ships, electronics, constructions, civil engineering, paints and printings due to the reliability of excellent adhesion strength and durability to various materials such as metals, plastics, wood, glass, ceramics, stone materials, and concrete. However, a cured product of the adhesive generally has a high modulus of elasticity and low energy absorption capability and thus has defective points, that is, hard and brittle. Therefore, problems are still encountered on the occasion of adhesion of materials greatly differing in coefficient of linear expansion, on the occasion of use of binders for such members as building materials that are subject to heat cycle-due repeated displacements or for printed circuit boards, or on the occasion of adhesion for providing insulating seals on substrates.

To solve such problem, a flexible structure is introduced into the epoxy resin skeleton to provide epoxy resins with flexibility. However, this means is sometimes unsatisfactory. Further, such flexible structure introduction sometimes results in decreases in such durability features as weathering resistance, thermal stability and solvent resistance.

On the other hand, the use of acrylic rubbers excellent in thermal stability and oil resistance has been investigated as materials for functional parts and safety parts, for example gaskets and the like, to be used in areas surrounding automotive engines, among others.

However, acrylic rubbers have poor curability problems: when, on the occasion of curing, they are kneaded with such compounding ingredients as a filler and a vulcanizing agent, they tend to stick to rolls; on the occasion of sheeting, the resulting compounds hardly become flat and smooth; and, on the occasion of molding, non-fluidity and like poor workability and slow rate of curing are encountered and/or a long period of time is required for postcuring.

Acrylic rubbers improved in workability and curability have so far been reported (Patent Document 1). However, the acrylic rubbers reported are not those which can be rapidly cured in the manner of photocuring with improved productivity.

The present inventors have previously reported (meth) acryloyl group-terminated polymers which can be designed so that they may be high in crosslink-to-crosslink molecular weight and can provide cured products with sufficient levels of rubber elasticity and elongation and the main chain of which can be obtained by living radical polymerization (Patent Documents 2 and 3).

However, it is feared that such polymers high in molecular weight will be high in viscosity and poor in workability. Another problem with them is that the addition of such a reinforcing filler as Aerosil to acrylic polymers insufficient in strength results in a further increase in viscosity.

Thus, it is a thinkable way to increase the strength of acrylic components and, on the other hand, weaken the tendency toward increases in viscosity by admixing an epoxy resin with the acrylic components while their physical properties, namely good weathering resistance, thermal stability and solvent resistance, among others, are maintained. For example, reports have so far been made about the technology of curing acrylic monomer/epoxy rein compositions by combined use of photoradical polymerization and photocationic polymerization (Patent Documents 4 and 5). However, the components used in the compositions are not those the main chain of which is an acrylic polymer; they cannot provide materials having balanced thermal stability, weathering resistance and oil resistance, among others.

Furthermore, it is a problem that the prior art photoradical- and photocation-curable compositions can be cured only to insufficient extents.

Patent Document 1: Japanese Kokai Publication 2000-154370
Patent Document 2: Japanese Kokai Publication 2000-72816
Patent Document 3: Japanese Kokai Publication 2000-95826
Patent Document 4: Japanese Kokai Publication Hei05-117592
Patent Document 5: Japanese Kokai Publication Hei08-143755

### SUMMARY OF THE INVENTION

It is an object of the present invention to provide a photoradical- and photocation-curable composition improved in curability in mixed systems comprising a vinyl polymer (e.g. acrylic polymer) and an epoxy while, in the art, such systems are unsatisfactory in curability.

In view of the above-discussed state of the art, the present inventors made intensive investigations and, as a

result, found that the photocation curing is insufficient in curing photoradical-curable and photocation-curable compositions and, then, they found that the curability of photoradical-curable and photocation-curable compositions can be improved by reducing the N atom-containing compound content in the main components of the compositions. Such and other findings have led to completion of the present invention.

Thus, the present invention relates to

(1) a photoradical- and photocation-curable composition which comprises:

(A) a vinyl polymer having, per molecule, two or more groups represented by the general formula (1):

$$-OC(O)C(R^a)=CH_2 \qquad (1)$$

wherein $R^a$ represents a hydrogen atom or an organic group containing 1 to 20 carbon atoms, at least one of which groups occurs at a molecular terminus, and
(B) an epoxy compound and/or oxetane compound and that the N atom-containing compound concentration in the component (A) is not higher than 1,000 ppm and the N atom-containing compound concentration relative to the component (B) is not higher than 2,300 ppm.

The invention also relates to

(2) a curable composition (1) wherein the N atom-containing compound concentration in the component (A) is not higher than 500 ppm.

The invention also relates to

(3) a curable composition (1) or (2) wherein the main chain of the component (A) is a (meth)acrylic polymer.

The invention also relates to

(4) a curable composition (1) to (3)
wherein the main chain of the component (A) is an acrylate ester polymer.

The invention also relates to

(5) a curable composition (1) to (4)
wherein the vinyl monomer constituting the main chain of the component (A) comprises at least two monomers selected from among butyl acrylate, ethyl acrylate and 2-methoxyethyl acrylate.

The invention also relates to

(6) a curable composition (1) to (5)
wherein, in the component (A), $R^a$ in formula (1) is a hydrogen atom or a hydrocarbon group containing 1 to 20 carbon atoms.

The invention also relates to

(7) a curable composition (6)
wherein, in the component (A), $R^a$ in formula (1) is a hydrogen atom or a methyl group.

The invention also relates to

(8) a curable composition (1) to (7),
wherein the main chain of the component (A) is produced by living radical polymerization of a vinyl monomer(s).

The invention also relates to

(9) a curable composition (8),
wherein the living radical polymerization is carried out in the manner of atom transfer radical polymerization.

The invention also relates to

(10) a curable composition (9),
wherein the atom transfer radical polymerization is carried out in the presence of a transition metal complex catalyst selected from among complexes of copper, nickel, ruthenium or iron.

The invention also relates to

(11) a curable composition (1) to (10),
wherein the main chain of the component (A) is produced by polymerization of a vinyl monomer (s) using a chain transfer agent.

The invention also relates to

(12) a curable composition (1) to (11),
wherein the component (A) has a number average molecular weight of not lower than 3,000.

The invention also relates to

(13) a curable composition (1) to (12),
wherein the (A) component vinyl polymer shows a weight average molecular weight/number average molecular weight ratio value of smaller than 1.8 as determined by gel permeation chromatography.

The invention also relates to

(14) a curable composition (1) to (13)
which contains a radical-polymerizable group-containing monomer and/or oligomer.

The invention also relates to

(15) a curable composition (1) to (14)
which contains an anionic polymerizable group-containing monomer and/or oligomer.

The invention also relates to

(16) a curable composition (14) or (15)
which contains a (meth)acryloyl type group-containing monomer and/or oligomer.

The invention also relates to

(17) a curable composition (16)
wherein the (meth) acryloyl type group-containing monomer and/or oligomer has a number average molecular weight of not higher than 5,000.

The invention also relates to

(18) a curable compositions (1) to (17)
wherein the (B) component epoxy compound and/or oxetane compound has no aromatic ring.

The invention also relates to

(19) a curable compositions (1) to (18)
which further comprises (C) a photoradical polymerization initiator and (D) a photocationic polymerization initiator.

The invention also relates to

(20) a curable composition (1) to (19)
which further comprises at least one compound (E) selected from the group consisting of epoxy group- and

(meth)acryloyl type group-containing compounds, oxetane group- and (meth)acryloyl type group-containing compounds and epoxy group-, oxetane group- and (meth)acryloyl type group-containing compounds.

The invention also relates to

(21) a curable composition (20)
wherein the component (E) is glycidyl methacrylate.

In the following, the photoradical- and photocation-curable composition according to the invention is described.

DETAILED DESCRIPTION OF THE INVENTION

The photoradical- and photocation-curable composition of the present invention is a composition which comprises:

(A) a vinyl polymer having, per molecule, two or more groups represented by the general formula (1):

$$-OC(O)C(R^a)=CH_2 \qquad (1)$$

wherein $R^a$ represents a hydrogen atom or an organic group containing 1 to 20 carbon atoms, at least one of which groups occurs at a molecular terminus, and
(B) an epoxy compound and/or oxetane compound and that the N atom-containing compound concentration in the component (A) is not higher than 1,000 ppm and the N atom-containing compound concentration relative to the component (B) is not higher than 2,300 ppm.

«Component (A) »

Component (A) is a vinyl polymer having, per molecule, two or more groups represented by the general formula (1):

$$-OC(O)C(R^a)=CH_2 \qquad (1)$$

wherein $R^a$ represents a hydrogen atom or an organic group containing 1 to 20 carbon atoms, at least one of which groups occurs at a molecular terminus.

The number of the group represented by the general formula (1) ((meth)acryloyl type group) in the component (A) is 2 or more, preferably 2 to 3, and more preferably 2, per molecule in terms of crosslinking ability.

One or more of the (meth)acryloyl type group mentioned above preferably occurs at a molecular terminus of the vinyl polymer from the viewpoint of obtaining rubber elasticity by rendering the intercrosslink molecular weights relatively high.

In the (meth) acryloyl type group, $R^a$ represents a hydrogen atom or an organic group having 1 to 20 carbon atoms and preferably a hydrogen atom or a hydrocarbon group having 1 to 20 carbon atoms.

Examples of the organic group having 1 to 20 carbon atoms include an alkyl group having 1 to 20 carbon atoms, an aryl group having 6 to 20 carbon atoms, an aralkyl group having 7 to 20 carbon atoms, and a nitrile group. These groups may be substituted with a hydroxyl group or the like.

Examples of an alkyl group having 1 to 20 carbon atoms include methyl, ethyl, propyl, butyl, pentyl, hexyl, octyl, and decyl.

Examples of an aryl group having 6 to 20 carbon atoms include phenyl and naphthyl.

Examples of an aralkyl group having 7 to 20 carbon atoms include benzyl and phenylethyl.

Preferred examples of $R^a$ include -H, $-CH_3$, $-CH_2CH_3$, $-(CH_2)_nCH_3$ (n represents an integer of 2 to 19), $-C_6H_5$, $-CH_2OH$, and -CN. Among these groups, -H and $-CH_3$ are more preferred.

As a vinyl monomer which constitutes the main chain of the component (A) is not particularly limited, and any of various monomers can be used. Examples of the vinyl monomer include (meth) acrylic acid monomers, such as (meth) acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylethyl (meth)acrylate, 2-perfluorohexylethyl (meth)acrylate, 2-perfluorodecylethyl (meth)acrylate, and 2-perfluorohexadecylethyl (meth)acrylate; aromatic vinyl monomers, such as styrene, vinyltoluene, α-methylstyrene, chlorostyrene, and styrenesulfonic acid and its salts; fluorine-containing vinyl monomers, such as perfluoroethylene, perfluoropropylene, and vinylidene fluoride; silicon-containing vinyl monomers, such as vinyltrimethoxysilane and vinyltriethoxysilane; maleic anhydride, maleic acid, and monoalkyl esters and dialkyl esters of maleic acid; fumaric acid and monoalkyl and dialkyl esters of fumaric acid; maleimide monomers, such as, maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile-containing vinyl monomers, such as acrylonitrile and methacrylonitrile; amido-containing vinyl monomers, such as acrylamide and methacrylamide; vinyl esters, such as vinyl acetate, vinyl propionate, vinyl pivalate, vinyl benzoate, and vinyl cinnamate; alkenes, such as ethylene and propylene; conjugated dienes, such as butadiene and isoprene; and vinyl chloride, vinylidene chloride, allyl chloride, and allyl alcohol. These compounds may be used alone, or at least two may be used in combination.

In particular, from the viewpoint of physical properties of a product etc., aromatic vinyl monomers and (meth)acrylic monomers are preferred. Acrylate monomers and methacrylate monomers are more preferred, and butyl acrylate, ethyl acrylate, and 2-methoxyethyl acrylate are further preferred. From the viewpoint of oil resistance, and the like, the vinyl monomer which constitutes the main chain particularly preferably contains at least two species selected from butyl acrylate, ethyl acrylate, and 2-methoxyethyl acrylate.

In the present invention, these preferred monomers may be copolymerized with another monomer mentioned above. In this case, the content by weight of the preferred monomers is preferably 40% by weight or more. In the above expression, the term" (meth) acrylic acid" means acrylic acid and/or methacrylic acid.

The molecular weight distribution [ratio of the weight-average molecular weight (Mw) to the number-average molecular weight (Mn) (Mw/Mn) determined by gel permeation chromatography (GPC) of the component (A) is not particularly limited, but the ratio is preferably less than 1.8, further preferably 1.7 or less, more preferably 1.6 or less, particularly preferably 1.5 or less, specifically preferably 1.4 or less, and most preferably 1.3 or less.

In GPC measurement in the present invention, a molecular weight is generally determined in terms of polystyrene using a polystyrene gel column and chloroform or tetrahydrofuran as a mobile phase.

The lower limit of number-average molecular weight of the component (A) is preferably 500, more preferably 3, 000, and the upper limit thereof is preferably 100,000, more preferably 40,000. When the molecular weight is less than 500, the inherent characteristics of the vinyl polymer tends to be not easily exhibited, while when the molecular weight is 100,000 or more, handling tends to become difficult.

<Process for producing component (A)>

The process for producing the component (A) is not particularly limited.

A vinyl polymer is generally produced by anionic polymerization or radical polymerization, but radical polymerization is preferred in view of versatility of a monomer or easy control. As the radical polymerization, living radical polymerization or radical polymerization using a chain transfer agent is preferred, and the former is particularly preferred.

Radical polymerization processes used for producing the component (A) are classified into a general radical polymerization process in which a monomer having a specified functional group and a vinyl monomer are simply copolymerized using an azo compound, a peroxide, or the like as a polymerization initiator, and a controlled radial polymerization process in which a specified functional group can be introduced at a controlled position such as a terminus or the like.

The general radical polymerization process is a simple process, and a monomer having a specified functional group can be introduced into a polymer only stochastically. When a polymer with high functionality is desired, therefore, a considerable amount of a monomer must be used. Conversely, use of a small amount of a monomer has the problem of increasing the ratio of a polymer in which the specified functional group is not introduced. There is also the problem of producing only a polymer with a wide molecular weight distribution and high viscosity due to free radical polymerization.

The controlled radical polymerization process is further classified into a chain transfer agent process in which polymerization is performed using a chain transfer agent having a specified functional group to produce a vinyl polymer having the functional group at a terminus, and a living radical polymerization process in which polymerization propagation termini propagate without causing termination reaction to produce a polymer having a molecular weight substantially equal to the design.

The chain transfer agent process is capable of producing a polymer with high functionality, but a considerable amount of a chain transfer agent having a specified functional group must be used relative to the initiator, thereby causing an economical problem of the cost including the treatment cost. Like the general radical polymerization process, the

chain transfer agent process also has the problem of producing only a polymer with a wide molecular weight distribution and high viscosity because it is free radical polymerization.

It is true that the living radical polymer process belongs to a radical polymerization process which has a high polymerization rate and is difficult to control because termination reaction easily occurs due to radical coupling or the like. However, unlike in the above-mentioned processes, in the living radical polymerization process, termination reaction little occurs, a polymer having a narrow molecular weight distribution (Mw/Mn of about 1.1 to 1.5) can be produced, and the molecular weight can be freely controlled by changing the charge ratio of the monomer to the initiator.

Therefore, the living radical polymerization process is capable of producing a polymer with a narrow molecular weight distribution and low viscosity and introducing a monomer having a specified functional group into a substantially desired position. Thus, this process is more preferred as a process for producing the vinyl polymer having the specified functional group.

In a narrow sense, "living polymerization" means polymerization in which molecular chains propagate while maintaining activity at the termini. However, the living polymerization generally includes pseudo-living polymerization in which molecular chains propagate in equilibrium between deactivated and activated termini. The definition in the present invention includes the latter.

In recent, the living radical polymerization has been actively studied by various groups. Examples of studies include a process using a cobalt porphyrin complex, as shown in Journal of American Chemical Society (J. Am. Chem. Soc.), 1994, vol. 116, p. 7943; a process using a radical scavenger such as a nitroxide compound, as shown in Macromolecules, 1994, vol. 27, p. 7228; and an atom transfer radical polymerization (ATRP) process using an organic halide or the like as an initiator and a transition metal complex as a catalyst.

Among these living radical polymerization processes, the atom transfer radical polymerization process in which a vinyl monomer is polymerized using an organic halide or a halogenated sulfonyl compound as an initiator and a transition metal complex as a catalyst has the above-mentioned characteristics of the living radical polymerization and also has the characteristic that a terminus has a halogen or the like, which is relatively useful for functional group conversion reaction, and the initiator and catalyst have high degrees of design freedom. Therefore, the atom transfer radical polymerization process is more preferred as a process for producing a vinyl polymer having a specified functional group.

Examples of the atom transfer radical polymerization process include the processes disclosed in Matyjaszewski, et al., Journal of American Chemical Society (J. Am. Chem. Soc.), 1995, vol. 117, p. 5614; Macromolecules, 1995, vol. 28, p. 7901; Science, 1996, vol. 272, p. 866; WO96/30421 and WO97/18247; and Sawamoto, et al., Macromolecules, 1995, vol. 28, p. 1721.

In the present invention, any one of these processes may be used without limitation, but the controlled radical polymerization is basically used, and the living radical polymerization is more preferred from the viewpoint of easy control. The atom transfer radical polymerization process is particularly preferred.

First, the controlled radical polymerization process using a chain transfer agent will be described.

The radical polymerization process using the chain transfer agent (telomer) is not particularly limited, but examples of a process for producing a vinyl polymer having a terminal structure suitable for the present invention include the following two processes:

A process for producing a halogen-terminated polymer using a halogenated hydrocarbon as the chain transfer agent as disclosed in Japanese Kokai Publication Hei-04-132706, and a method for producing a hydroxyl group-terminated polymer using a hydroxyl group-containing mercaptane or a hydroxyl group-containing polysulfide or the like as the chain transfer agent as disclosed in Japanese Kokai Publication Sho-61-271306, Japanese Patent Publication No. 2594402, and Japanese Kokai Publication Sho-54-47782.

Next, the living radical polymerization will be described.

First, the process using a nitroxide compound as the radical scavenger (capping agent) will be described.

This polymerization process generally uses stable nitroxy free radical (=N-O·) as a radical capping agent. Preferred examples of such a compound include, but not limited to, nitroxy free radicals produced from cyclic hydroxyamines, such as 2,2,6,6-substituted-1-piperidinyloxy radical and 2,2,5,5-substituted-1-pyrrolidinyloxy radical. As a substituent, an alkyl group having 4 or less carbon atoms, such as methyl or ethyl, is suitable.

Specific examples of a nitroxy free radical compound include, but not limited to, 2,2,6,6-tetramethyl-1-piperidinyloxy radical (TEMPO), 2,2,6,6-tetraethyl-1-piperidinyloxy radical, 2,2,6,6-tetramethyl-4-oxo-1-piperidinyloxy radical, 2,2,5,5-tetramethyl-1-pyrrolidinyloxy radical, 1,1,3,3-tetramethyl-2-isoindolinyloxy radical, and N,N-di-tert-butylaminoxy radical.

Instead of the nitroxy free radical, stable free radical such as galvinoxyl free radical may be used.

The radical capping agent is used in combination with the radical generator. The reaction product of the radical capping agent and the radical generator possibly servers as a polymerization initiator to promote polymerization of an addition-polymerizable monomer.

The ratio between both agents used is not particularly limited, but the amount of the radical initiator is preferably

0.1 to 10 moles per mole of the radical capping agent.

As a radical generator, any one of various compounds can be used, but a peroxide capable of generating radical under a polymerization temperature is preferred.

Examples of the peroxide include, but not particularly limited to, diacyl peroxides, such as benzoyl peroxide and lauroyl peroxide; dialkyl peroxides, such as dicumyl peroxide and di-tert-butyl peroxide; peroxycarbonates, such as diisopropyl peroxydicarbonate and bis(4-tert-butylcyclohexyl) peroxydicarbonate; and alkyl peresters, such as tert-butyl peroxyoctoate and tert-butyl peroxybenzoate. In particular, benzoyl peroxide is preferred.

Instead of the peroxide, a radical generator such as a radical generating azo compound, e.g., azobisisobutyronitrile, may be used.

As reported in Macromolecules, 1995, 28, 2993, the alkoxyamine compound shown below may be used as the initiator instead of a combination of the radical capping agent and the radical generator.

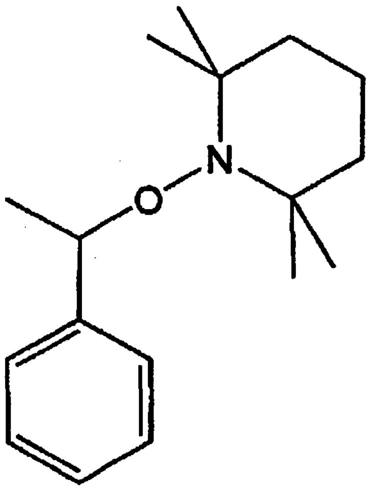

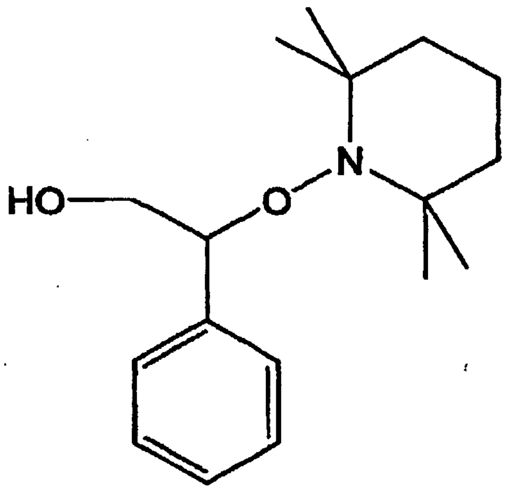

When the alkoxyamine compound is used as the initiator, the use of a compound having a functional group such as a hydroxyl group as mentioned above produces a polymer having the functional group at a terminus. When this compound is used in the method of the present invention, a polymer having the functional group at a terminus is produced.

The conditions of polymerization using the nitroxide compound as the radical scavenger, such as the monomer, the solvent, the polymerization temperature, and the like, are not particularly limited. However, these conditions may be the same as those in atom transfer radical polymerization which will be described below.

Next, the atom transfer radical polymerization suitable as the living radical polymerization of the present invention will be described.

The atom transfer radical polymerization uses, as the initiator, an organic halide, particularly an organic halide having a highly reactive carbon-halogen bond (e.g., a carbonyl compound having a halogen at an $\alpha$-position, or a compound having a halogen at a benzyl position), or a halogenated sulfonyl compound.

Specific examples of such a compound include the following:

$C_6H_5$-$CH_2X$, $C_6H_5$-C(H) (X)$CH_3$, and $C_6H_5$-C(X) $(CH_3)_2$

(wherein $C_6H_5$ is a phenyl group, X is a chlorine atom, a bromine atom, or an iodine atom);
$R^3$-C(H) (X)-$CO_2R^4$, $R^3$-C($CH_3$)(X)-$CO_2R^4$, $R^3$-C(H)(X)-C(O)$R^4$, and $R^3$-C($CH_3$)(X)-C(O)$R^4$
(wherein $R^3$ and $R^4$ are each a hydrogen atom or an alkyl group having 1 to 20 carbon atoms, an aryl group having 6 to 20 carbon atoms, or an aralkyl group having 7 to 20 carbon atoms; X is a chlorine atom, a bromine atom, or an iodine atom); and

$R^3$-$C_6H_4$-$SO_2X$

(wherein $R^3$ is a hydrogen atom or an alkyl group having 1 to 20 carbon atoms, an aryl group having 6 to 20 carbon atoms, or an aralkyl group having 7 to 20 carbon atoms; X is a chlorine atom, a bromine atom, or an iodine atom).

As the initiator of the atom transfer radical polymerization, an organic halide or halogenated sulfonyl compound having a functional group other than a functional group which initiates polymerization can be used. In this case, the resultant vinyl polymer has the functional group at one of the main chain ends and a structure represented by the general

formula (1) at the other end.

Examples of such a functional group include alkenyl, crosslinkable silyl, hydroxyl, epoxy, amino, and amido.

Examples of such an organic halide having an alkenyl group include, but not limited to, compounds having the structure represented by the general formula (6):

$$R^6R^7C(X)\text{-}R^8\text{-}R^9\text{-}C(R^5)=CH_2 \qquad (6)$$

(wherein $R^5$ is a hydrogen atom or a methyl group; $R^6$ and $R^7$ are each a hydrogen atom, an alkyl group having 1 to 20 carbon atoms, an aryl group having 6 to 20 carbon atoms, or an aralkyl group having 7 to 20 carbon atoms, or $R^6$ and $R^7$ are bonded together at the other ends; $R^8$ is -C(O)O- (ester group), -C(O)- (keto group), or an o-, m-, or p-phenylene group; $R^9$ is a direct bond or a divalent organic group having 1 to 20 carbon atoms, which may contain at least one ether bond; and X is a chlorine atom, a bromine atom, or an iodine atom).

Specific examples of substituents $R^6$ and $R^7$ include a hydrogen atom, methyl, ethyl, n-propyl, isopropyl, butyl, pentyl, and hexyl. Substituents $R^6$ and $R^7$ may be bonded together at the other ends to form a cyclic skeleton.

Examples of divalent organic group $R^9$ having 1 to 20 carbon atoms, which may contain at least one ether bond, include alkylene having 1 to 20 carbon atoms, which may contain at least one ether bond.

Specific examples of an alkenyl group-containing organic halide represented by the general formula (6) include the following:

$XCH_2C(O)O(CH_2)_nCH=CH_2$,

$H_3CC(H)(XC(O)O(CH_2)_nCH=CH_2$,

$(H_3C)_2C(X)C\ (O)O(CH_2)_nCH=CH_2$,

$CH_3CH_2C(H)\ (X)C(O)O(CH_2)_nCH=CH_2$,

and

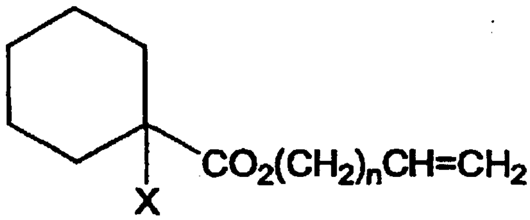

(wherein X is a chlorine atom, a bromine atom, or an iodine atom, and n is an integer of 0 to 20);

$XCH_2C(O)O(CH_2)_nO(CH_2)CH=CH_2$,

$H_3CC(H)\ (X)C\ (O)O(CH_2)_nO(CH_2)_mCH=CH_2$,

$(H_3C)_2C(X)C\ (O)O(CH_2)_nO(CH_2)_mCH=CH_2$,

$CH_3CH_2C(H)\ (X)C\ (O)O(CH_2)_nO(CH_2)_mCH=CH_2$,

and

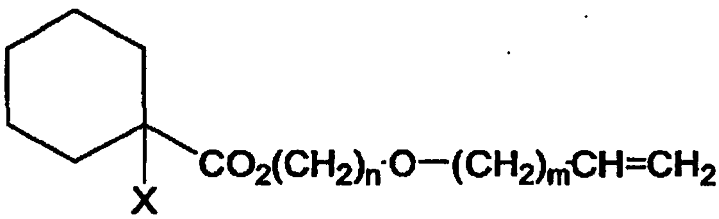

(wherein X is a chlorine atom, a bromine atom, or an iodine atom, n is an integer of 1 to 20, and m is an integer of 0 to 20);
O, m, p-$XCH_2$-$C_6H_4$- $(CH_2)_n$-CH=$CH_2$,
o, m, p-$CH_3C$ (H) (X) -$C_6H_4$-$(CH_2)_n$-CH-$CH_2$, and
O, m, p-$CH_3CH_2C$(H) (X)-$C_6H_4$-$(CH_2)_n$-CH=$CH_2$
(wherein X is a chlorine atom, a bromine atom, or an iodine atom, and n is an integer of 0 to 20);
o, m, p-$XCH_2$-$C_6H_4$- $(CH_2)_n$-O- $(CH_2)_m$-CH=$CH_2$,
o, m, p-$CH_3C$ (H) (X) -$C_6H_4$- $(CH_2)_n$-O- $(CH_2)_m$-CH=$CH_2$, and o, m, p-$CH_3CH_2C$ (H) (X) -$C_6H_4$- $(CH_2)_n$-O- $(CH_2)_m$CH=$CH_2$ (wherein X is a chlorine atom, a bromine atom, or an iodine atom, n is an integer of 1 to 20, and m is an integer of 0 to 20);
O, m, p-$XCH_2$-$C_6H_4$-O-$(CH_2)_n$-CH=$CH_2$,
o, m, p-$CH_3C$(H)(X)-$C_6H_4$-O-$(CH_2)_n$-CH=$CH_2$, and
o, m, p-$CH_3CH_2C$(H) (X)-$C_6H_4$-O-$(CH_2)_n$-CH=$CH_2$
(wherein X is a chlorine atom, a bromine atom, or an iodine atom,
and n is an integer of 0 to 20); and
O, m, p-$XCH_2$-$C_6H_4$-O- $(CH_2)_n$-O- $(CH_2)_m$-CH=$CH_2$,
o, m, p-$CH_3C$ (H) (X)-$C_6H_4$-O-$(CH_2)_n$-O-$(CH_2)_m$-CH=$CH_2$, and
o, m, p-$CH_3CH_2C$ (H) (X)-$C_6H_4$-O-$(CH_2)_n$-O-$(CH_2)_m$-CH=$CH_2$ (wherein X is a chlorine atom, a bromine atom, or an iodine atom, n is an integer of 1 to 20, and m is an integer of 0 to 20).

Other examples of such an organic halide having an alkenyl group include compounds represented by the general formula (7) :

$$H_2C=C(R^5)-R^9-C(R^6)(X)-R^{10}-R^7 \qquad (7)$$

(wherein $R^5$, $R^6$, $R^7$, $R^9$, and X represent the same as the above, and $R^{10}$ represents a direct bond or -C (O)O- (ester group) , -C (O)-(keto group), or an o-, m-, or p-phenylene group).

$R^9$ is a direct bond or a divalent organic group having 1 to 20 carbon atoms (which may contain at least one ether bond) . When $R^9$ is a direct bond, the compound is a halogenated allyl compound in which a vinyl group is bonded to the carbon bonded to a halogen. In this case, the carbon-halogen bond is activated by the adjacent vinyl group, and thus a C(O)O or phenylene group is not necessarily required as $R^{10}$, and a direct bond may be present. When $R^9$ is not a direct bond, $R^{10}$ is preferably a C (O) O, C (O), or phenylene group for activating the carbon-halogen bond.

Specific examples of the compounds represented by the general formula (7) include the following:

$CH_2$=$CHCH_2X$, $CH_2$=$C(CH_3)CH_2X$, $CH_2$=CHC(H)(X)$CH_3$,
$CH_2$=$C(CH_3)$C(H)(X)$CH_3$, $CH_2$=CHC(X)$(CH_3)_2$, $CH_2$=CHC(H)(X)$C_2H_5$,
$CH_2$=CHC(H)(X)CH$(CH_3)_2$, $CH_2$=CHC(H)(X)$C_6H_5$, $CH_2$=CHC(H)(X)$CH_2C_6H_5$,
$CH_2$=$CHCH_2C$(H)(X)-$CO_2R$, $CH_2$=CH$(CH_2)_2$C(H)(X)-$CO_2R$,
$CH_2$=CH$(CH_2)_3$C(H) (X)-$CO_2R$, $CH_2$=CH$(CH_2)_8$C(H) (X)-$CO_2R$,
$CH_2$=$CHCH_2C$(H) (X)-$C_6H_5$, $CH_2$=CH$(CH_2)_2$C(H) (X)-$C_6H_5$, and
$CH_2$=CH$(CH_2)_3$C(H) (X)-$C_6H_5$

(wherein X is a chlorine atom, a bromine atom, or an iodine atom, and R is an alkyl, aryl, or aralkyl having 1 to 20 carbon atoms) .

Specific examples of such a halogenated sulfonyl compound having an alkenyl group include the following:

o-, m-, p-$CH_2$=CH-$(CH_2)_n$-$C_6H_4$-$SO_2X$,

and

o-, m-, p-$CH_2$=CH-$(CH_2)_n$-O-$C_6H_4$-$SO_2X$

(wherein X is a chlorine atom, a bromine atom, or an iodine atom, and n is an integer of 0 to 20).

Specific examples of an organic halide having a crosslinkable silyl group include, but not limited to, compounds with a structure represented by the general formula (8) :

$$R^6R^7C(X)-R^8-R^9-C(H)(R^5)CH_2-[Si(R^{11})_{2-b}(Y)_bO]_m-Si(R^{12})_{3-a}(Y)_a \qquad (8)$$

(wherein $R^5$, $R^6$, $R^7$, $R^8$, $R^9$, and X represent the same as the above, and $R^{11}$ and $R^{12}$ each represent alkyl, aryl, or aralkyl having 1 to 20 carbon atoms, or a triorganosiloxy group represented by $(R')_3SiO$- (the three R's are each a

monovalent hydrocarbon group having 1 to 20 carbon atoms and may be the same or different) ; when two or more groups $R^{11}$ or $R^{12}$ are present, they may be the same or different; Y represents a hydroxyl group or a hydrolyzable group, and when two or more groups Y are present, they may be the same or different; a represents 0, 1, 2, or 3; b represents 0, 1, or 2; m represents an integer of 0 to 19; and a + mb ≥1 is satisfied).

Specific examples of the compounds represented by the general formula (8) include the following:

$XCH_2C(O)O(CH_2)_nSi(OCH_3)_3$,

$CH_3C(H)(X)C(O)O(CH_2)_nSi(OCH_3)_3$,

$(CH_3)_2C(X)C (O)O(CH_2)_nSi(OCH_3)_3$,

$XCH_2C(O)O(CH_2)_nSi(CH_3)(OCH_3)_2$,

$CH_3C(H) (X)C (O)O(CH_2)_nSi(CH_3)(OCH_3)_2$,

and

$(CH_3)_2C(X) C (O)O(CH_2)_nSi(CH_3)(OCH_3)_2$

(wherein X is a chlorine atom, a bromine atom, or an iodine atom, and n is an integer of 0 to 20);

$XCH_2C(O)O(CH_2)_nO(CH_2)_mSi(OCH_3)_3$,

$H_3CC(H)(X)C(O)O(CH_2)_nO(CH_2)_mSi(OCH_3)_3$,

$(H_3C)_2C(X)C(O)O(CH_2)_nO(CH_2)_mSi(OCH_3)_3$,

$CH_3CH_2C(H) (X)C (O)O(CH_2)_nO(CH_2)_mSi(OCH_3)_3$,

$XCH_2C(O)O(CH_2)_nO(CH_2)_mSi(CH_3)(OCH_3)_2$,

$H_3CC(H) (X)C(O)O(CH_2)_nO(CH_2)_m\text{-}Si(CH_3) (OCH_3)_2$,

$(H_3C)_2C (X)C (O) O (CH_2)_nO (CH_2)_m\text{-}Si (CH_3)(OCH_3)_2$,

and

$CH_3CH_2C(H)(X)C(O)O(CH_2)_nO(CH_2)_m\text{-}Si(CH_3)(OCH_3)_2$,

(wherein X is a chlorine atom, a bromine atom, or an iodine atom, n is an integer of 1 to 20, and m is an integer of 0 to 20); and
o, m, p-$XCH_2\text{-}C_6H_4(CH_2)_2Si(OCH_3)_3$,
o, m, p-$CH_3C(H) (X) \text{-}C_6H_4\text{-}(CH_2)_2Si(OCH_3)_3$,
o, m, p-$CH_3CH_2C (H) (X) \text{-}C_6H_4\text{-} (CH_2)_2Si (OCH_3)_3$,
o, m, p-$XCH_2\text{-}C_6H_4\text{-} (CH_2)_3Si (OCH_3)_3$,
o, m, p-$CH_3C(H) (X) \text{-}C_6H_4\text{-} (CH_2)_3Si (OCH_3)_3$,
o, m, p-$CH_3CH_2C(H) (X) \text{-}C_6H_4\text{-}(CH_2)_3Si (OCH_3)_3$,
o, m, p-$XCH_2\text{-}C_6H_4\text{-} (CH_2)_2\text{-}O\text{-} (CH_2)_3Si (OCH_3)_3$,
o, m, p-$CH_3C (H) (X) \text{-}C_6H_4\text{-} (CH_2)_2\text{-}O\text{-} (CH_2)_3Si (OCH_3)_3$,
o, m, p-$CH_3CH_2C (H) (X) \text{-}C_6H_4\text{-} (CH_2)_2\text{-}O\text{-} (CH_2)_3Si (OCH_3)_3$,
o, m, p-$XCH_2\text{-}C_6H_4\text{-}O\text{-}(CH_2)_3Si (OCH_3)_3$,
o, m, p-$CH_3C(H) (X) \text{-}C_6H_4\text{-}O\text{-}(CH_2)_3Si(OCH_3)_3$,
o, m, p-$CH_3CH_2C(H) (X) \text{-}C_6H_4\text{-}O\text{-}(CH_2)_3\text{-}Si(OCH_3)_3$,
o, m, p-$XCH_2\text{-}C_6H_4\text{-}O\text{-}(CH_2)_2\text{-}O\text{-}(CH_2)_3\text{-}Si(OCH_3)_3$,
o, m, p-$CH_3C(H) (X) \text{-}C_6H_4\text{-}O\text{-}(CH_2)_2\text{-}O\text{-}(CH_2)_3Si(OCH_3)_3$, and
o, m, p-$CH_3CH_2C(H) (X) \text{-}C_6H_4\text{-}O\text{-}(CH_2)_2\text{-}O\text{-}(CH_2)_3Si(OCH_3)_3$
(wherein X is a chlorine atom, a bromine atom, or an iodine atom).

Other examples of the organic halide having a crosslinkable silyl group include compounds represented by the

general formula (9):

$$(R^{12})_{3-a}(Y)_aSi-[OSi(R^{11})_{2-b}(Y)_b]_m-CH_2-C(H)(R^5)-R^9-C(R^6)(X)-R^{10}-R^7 \quad (9)$$

(wherein $R^5$, $R^6$, $R^7$, $R^9$, $R^{10}$, $R^{11}$, $R^{12}$, a, b, X and Y represent the same as the above, and m is an integer of 0 to 19).

Specific examples of the compounds represented by the general formula (9) include the following:

$(CH_3O)_3SiCH_2CH_2C(H)(X)C_6H_5$,

$(CH_3O)_2(CH_3)SiCH_2CH_2C(H)(X)C_6H5$,

$(CH_3O)_3Si(CH_2)_2C(H)(X)-CO_2R$,

$(CH_3O)_2(CH_3)Si(CH_2)_2C(H)(X)-CO_2R$,

$(CH_3O)_3Si(CH_2)_3C(H)(X)-CO_2R$,

$(CH_3O)_2(CH_3)Si(CH_2)_3C(H)(X)-CO_2R$,

$(CH_3O)_3Si(CH_2)_4C(H)(X)-CO_2R$,

$(CH_3O)_2(CH_3)Si(CH_2)_4C(H)(X)-CO_2R$,

$(CH_3O)_3Si(CH_2)_9C(H)(X)-CO_2R$,

$(CH_3O)_2(CH_3)Si(CH_2)_9C(H)(X)-CO_2R$,

$(CH_3O)_3Si(CH_2)_3C(H)(X)-C_6H_5$,

$(CH_3O)_2(CH_3)Si(CH_2)_3C(H)(X)-C_6H_5$,

$(CH_3O)_3Si(CH_2)_4C(H)(X)-C_6H_5$, and

$(CH_3O)_2(CH_3)Si(CH_2)_4C(H)(X)-C_6H_5$

(wherein X is a chlorine atom, a bromine atom, or an iodine atom, and R is alkyl, aryl, or aralkyl having 1 to 20 carbon atoms).

Examples of the hydroxyl group-containing organic halide or halogenated sulfonyl compound include, but not limited to, the following:

$HO-(CH_2)_n-OC(O)C(H)(R)(X)$

(wherein X is a chlorine atom, a bromine atom, or an iodine atom, R is a hydrogen atom or alkyl, aryl, or aralkyl having 1 to 20 carbon atoms, and n is an integer of 1 to 20).

Examples of the amino group-containing organic halide or halogenated sulfonyl compound include, but not limited to, the following:

$H_2N-(CH_2)_n-OC(O)C(H)(R)(X)$

(wherein X is a chlorine atom, a bromine atom, or an iodine atom, R is a hydrogen atom or alkyl, aryl, or aralkyl having 1 to 20 carbon atoms, and n is an integer of 1 to 20).

Examples of the epoxy group-containing organic halide or halogenated sulfonyl compound include, but not limited to, the following:

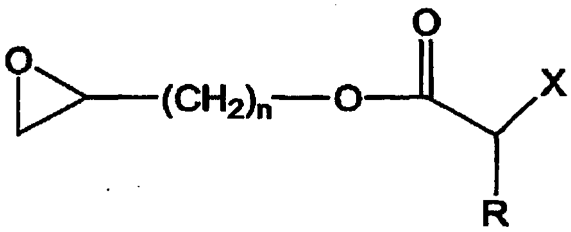

(wherein X is a chlorine atom, a bromine atom, or an iodine atom, R is a hydrogen atom or alkyl, aryl, or aralkyl having 1 to 20 carbon atoms, and n is an integer of 1 to 20).

In order to obtain a vinyl polymer having at least two terminal groups represented by the general formula (1) per molecule, an organic halide or halogenated sulfonyl compound having at least two initiation points is preferably used as the initiator. Examples of such a compound include the following:

o,m,p-X-$CH_2$-$C_6H_4$-$CH_2$-X

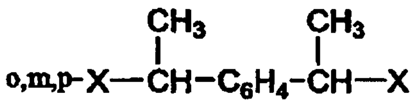 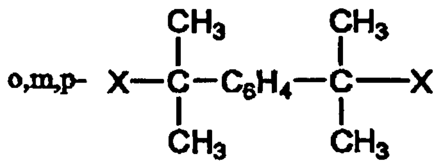

(wherein $C_6H_4$ is a phenylene group, and X is a chlorine atom, a bromine atom, or an iodine atom.)

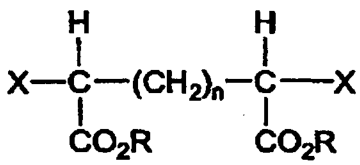 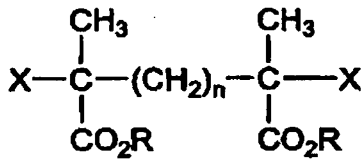

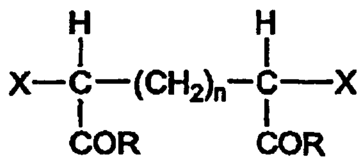 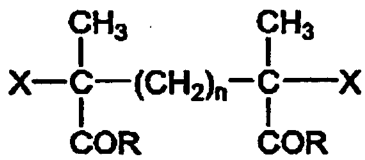

(wherein R is an alkyl, aryl, or aralkyl group having 1 to 20 carbon atoms, n is an integer of 0 to 20, and X is a chlorine atom, a bromine atom, or an iodine atom.)

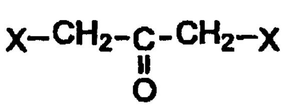 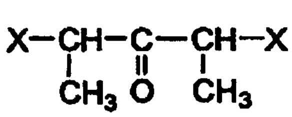 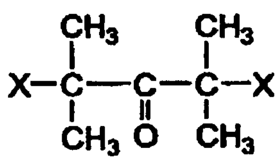

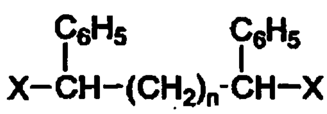

(wherein X is a chlorine atom, a bromine atom, or an iodine atom, and n is an integer of 0 to 20.)

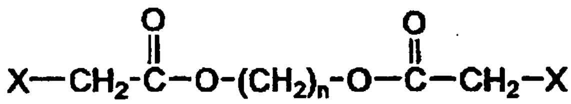

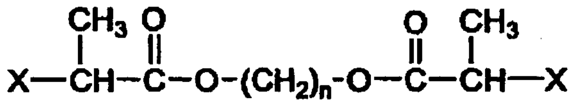

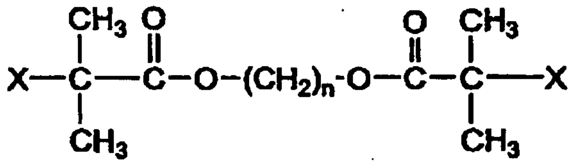

(wherein n is an integer of 1 to 20, and X is a chlorine atom, a bromine atom, or an iodine atom.)

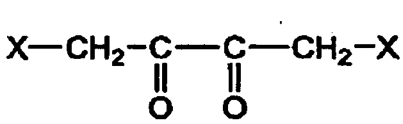

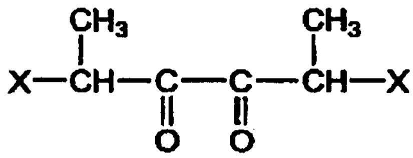

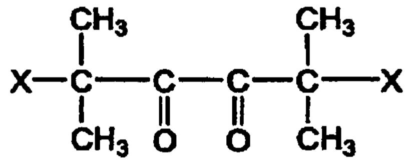

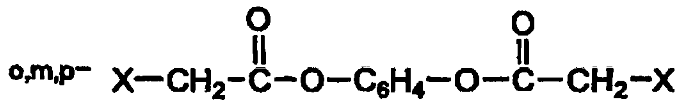

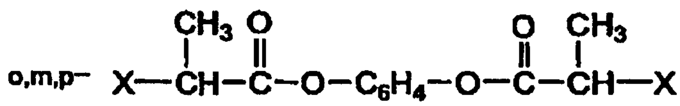

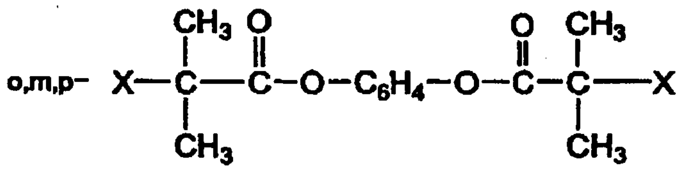

o,m,p-X-$SO_2$-$C_6H_4$-$SO_2$-X

(wherein X is a chlorine atom, a bromine atom, or an iodine atom.)

The vinyl monomer used in the polymerization is not particularly limited, and any of the compounds listed above can be preferably used.

The transition metal complex used as the polymerization catalyst is not particularly limited, but a metal complex composed of a VII, VIII, IX, X, or XI group element in the periodic table as a central metal, for example, a metal complex composed of copper, nickel, ruthenium, or iron, is preferred. A complex of zero-valent copper, monovalent copper, divalent ruthenium, divalent iron, or divalent nickel is more preferred. Among these complexes, a copper complex is most preferred.

Specific examples of the monovalent copper compound include cuprous chloride, cuprous bromide, cuprous

iodide, cuprous cyanide, cuprous oxide, and cuprous perchlorate.

When a copper compound is used, a ligand, such as 2,2'-bipyridyl or its derivative, 1,10-phenanthroline or its derivative, or polyamine, e.g., tetramethylethylenediamine, pentamethyldiethylenetriamine, or hexamethyl tris (2-aminoethyl) amine, can be added for increasing catalyst activity.

Also, a tristriphenylphosphine complex ($RuCl_2(PPh_3)_3$) of divalent ruthenium chloride is suitable as the catalyst.

When a ruthenium compound is used, an aluminum alkoxide may be added as an activator.

Furthermore, a bistriphenylphosphine complex ($FeCl_2(PPh_3)_2$) of divalent iron, a bistriphenylphosphine complex ($NiCl_2(PPh_3)_2$) of divalent nickel, or a bistributylphosphine complex ($NiBr_2(PBu_3)_2$) of divalent nickel is preferred as the catalyst.

The polymerization can be performed without a solvent or in any of various solvents.

Examples of the solvent include hydrocarbon solvents, such as benzene, toluene and xylene; ether solvents, such as diethyl ether and tetrahydrofuran; halogenated hydrocarbon solvents, such as methylene chloride and chloroform; ketone solvents, such as acetone, methyl ethyl ketone, methyl isobutyl ketone and diisobutyl ketone; alcohol solvents, such as methanol, ethanol, propanol, isopropanol, n-butyl alcohol, and tert-butyl alcohol; nitrile solvents, such as acetonitrile, propionitrile, and benzonitrile; ester solvents, such as ethyl acetate, butyl acetate, amyl acetate and cellosolve acetate; and carbonate solvents, such as ethylene carbonate and propylene carbonate. These solvents can be used alone or as a mixture of two or more.

The polymerization can be performed in a range of room temperature to 200°C, and preferably 50°C to 150°C.

<Introduction of functional group>

The process for producing the component (A) is not particularly limited, but polymer (I) can be produced by, for example, preparing a vinyl polymer having a reactive functional group by the above-described method, and then substituting the reactive functional group with a substituent having a (meth)acryloyl type group.

The conversion of a terminal group of a vinyl polymer having a reactive functional group to a group represented by the general formula (1) will be described below.

The process for introducing a (meth) acryloyl type group to an end of the vinyl polymer is not limited, but the following process can be used, for example:

(Introduction process 1) Process of reacting a vinyl polymer having a halogen group (a halogen atom) at an end with a compound represented by the general formula (2):

$$M^{+-}OC\ (O)C\ (R^a)=CH2 \qquad (2)$$

(wherein $R^a$ represents hydrogen or an organic group having 1 to 20 carbon atoms, and $M^+$ represents an alkali metal ion or quaternary ammonium ion).

As the vinyl polymer having a halogen group at an end, a polymer having a terminal structure represented by the general formula (3) is preferred:

$$-CR^1R^2X \qquad (3)$$

(wherein $R^1$ and $R^2$ each represent a group bonded to an ethylenically unsaturated group of a vinyl monomer, and X represents a chlorine atom, a bromine atom, or an iodine atom) . (Introduction process 2) Process of reacting a vinyl polymer having a hydroxyl group at an end with a compound represented by the general formula (4):

$$X^1C(O)C(R^a)=CH_2 \qquad (4)$$

(wherein $R^a$ represents a hydrogen atom or an organic group having 1 to 20 carbon atoms, and $X^1$ represents a chlorine atom, a bromine atom, or a hydroxyl group).

(Introduction process 3) Process of reacting a vinyl polymer having a hydroxyl group at an end with a diisocyanate compound and then reacting the residual isocyanate group with a compound represented by the general formula (5):

$$HO\text{-}R'\text{-}OC(O)C(R^a)=CH_2 \qquad (5)$$

(wherein $R^a$ represents a hydrogen atom or an organic group having 1 to 20 carbon atoms, and R' represents a divalent organic group having 2 to 20 carbon atoms).

Each of these processes will be described in detail below.

<Introduction process 1>

Introduction process 1 includes reacting a vinyl polymer having a halogen group at a terminus with a compound represented by the general formula (2).
Although the vinyl polymer having a halogen group at a terminus is not particularly limited, a polymer having a terminal group represented by the general formula (3).
As the groups represented by $R^1$ and $R^2$ in the general formula (3) and bound to the ethylenically unsaturated bond of the vinyl monomer, there may be mentioned a hydrogen atom and such groups as methyl, carbonyl, carboxylate, toluyl, fluoro, chloro, trialkoxysilyl, phenylsulfonic acid, carboxylic acid imide and cyano groups.
The vinyl polymer having a halogen group at a terminus, particularly the vinyl polymer having the terminal group represented by the general formula (3), can be produced by a process of polymerizing a vinyl monomer using the organic halide or halogenated sulfonyl compound as the initiator and the transition metal complex as the catalyst, or a process of polymerizing a vinyl monomer using a halide as the chain transfer agent. However, the former process is preferred.
The compound represented by the general formula (2) is not particularly limited.
Organic group $R^a$ having 1 to 20 carbon atoms, which is in the general formula (2), is exemplified by the same as the above, and specific examples of $R^a$ include those exemplified by the same as the above.
$M^+$ in the general formula (2) is a counter cation of oxyanion, and examples of these include an alkali metal ion, a quaternary ammonium ion, and the like.
Examples of the alkali metal ion include lithium ion, sodium ion, and potassium ion. Examples of a quaternary ammonium ion include tetramethylammonium ion, tetraethylammonium ion, tetrabenzylammonium ion, trimethyldodecylammonium ion, tetrabutylammonium ion, and dimethylpiperidiniuum ion. Among these, there may be mentioned preferably an alkali metal ion, and more preferably sodium ion or potassium ion.
The compound represented by the general formula (2) is preferably used in an amount of 1 to 5 equivalents and more preferably 1.0 to 1.2 equivalents relative to the terminal group represented by the general formula (3).
The solvent used for carrying out the reaction is not particularly limited, but a polar solvent is preferred because the reaction is nucleophilic substitution reaction. Preferably used are tetrahydrofuran, dioxane, diethyl ether, acetone, dimethylsulfoxide, dimethylformamide, dimethylacetamide, hexamethylphosphoric triamide, and acetonitrile, etc.
The reaction temperature is not particularly limited, but it is preferably 0 to 150°C and more preferably 10°C to 100°C.

<Introduction process 2>

Introduction process 2 includes reacting a vinyl polymer having a hydroxyl group at a terminus with a compound represented by the general formula (4).
The compound represented by the general formula (4) is not particularly limited.
Organic group $R^a$ having 1 to 20 carbon atoms, which is in the general formula (4), is exemplified by the same as the above, and specific examples of $R^a$ include those exemplified by the same as the above.
The vinyl polymer having a hydroxyl group at a terminus can be produced by a process of polymerizing a vinyl monomer using the organic halide or halogenated sulfonyl compound as the initiator and the transition metal complex as the catalyst, or a process of polymerizing a vinyl monomer using a hydroxyl group-containing compound as the chain transfer agent. However, the former process is preferred.
The process for producing the vinyl polymer having a hydroxyl group at a terminus is not particularly limited, but examples of the process include the following, for example:

(a) A process of reacting a second monomer such as a compound having both a polymerizable alkenyl group and a hydroxyl group in its molecule represented by the general formula (10) below in living radical polymerization for synthesizing a vinyl polymer.

$$H_2C{=}C(R^{13})\text{-}R^{14}\text{-}R^{15}\text{-}OH \qquad (10)$$

(wherein $R^{13}$ represents a hydrogen atom or an organic group having 1 to 20 carbon atoms, $R^{14}$ represents -C (O)O- (ester group) or an o-, m-, or p-phenylene group, and $R^{15}$ represents a direct bond or a divalent organic group having 1 to 20 carbon atoms, which may contain at least one ether bond).
In the formula, $R^{13}$ is preferably a hydrogen atom or a methyl group. The compound having an ester group as $R^{14}$ is a (meth)acrylate compound, and the compound having a phenylene group as $R^{14}$ is a styrene compound. Specific examples of $R^{15}$ are the same as those of $R^9$.
The time to react the compound having both a polymerizable alkenyl group and a hydroxyl group in its molecule

is not particularly limited. However, particularly when rubber properties are expected, the second monomer is preferably reacted at the final stage of polymerization reaction or after the completion of reaction of a predetermined monomer.

(b) A process of reacting a second monomer such as a compound having both a low-polymerizable alkenyl group and a hydroxyl group in its molecule at the final stage of polymerization reaction or after the completion of reaction of a predetermined monomer in living radical polymerization for synthesizing a vinyl polymer.

The compound is not particularly limited, but a compound represented by the general formula (11) or the like can be used.

$$H_2C=C(R^{13})-R^{16}-OH \qquad (11)$$

(wherein $R^{13}$ represent the same as the above, and $R^{16}$ represents a divalent organic group having 1 to 20 carbon atoms, which may contain at least one ether bond).

Specific examples of $R^{16}$ are the same as those of $R^9$.

The compound represented by the general formula (11) is not particularly limited, but an alkenyl alcohol, such as 10-undecenol, 5-hexenol, or allyl alcohol, is preferred from the viewpoint of easy availability.

(c) A process of introducing a terminal hydroxyl group by hydrolysis of a carbon-halogen bond represented by the general formula (3) or by reacting a hydroxyl group-containing compound with a halogen of a vinyl polymer having at least one carbon-halogen bond represented by the general formula (3), which is produced by atom transfer radical polymerization, as disclosed in Japanese Kokai Publication Hei-04-132706.

(d) A process of introducing a halogen atom by reacting a vinyl polymer having at least one carbon-halogen bond represented by the general formula (3) and produced by atom transfer radical polymerization with a stabilized carbanion represented by the general formula (12) having a hydroxyl group.

$$M^+C^-(R^{17})(R^{18})-R^{16}-OH \qquad (12)$$

(wherein $R^{16}$ and $M^+$ represent the same as the above, and $R^{17}$ and $R^{18}$ each represent an electrophilic group capable of stabilizing carbanion $C^-$ or one of $R^{17}$ and $R^{18}$ represents an electrophilic group, the other representing a hydrogen atom or an alkyl or phenyl group having 1 to 10 carbon atoms).

Examples of the electrophilic group include $-CO_2R$ (ester group), -C(O)R (keto group), $-CON(R_2)$ (amido group), -COSR (thioester group), -CN (nitrile group) and $-NO_2$ (nitro group), and particularly preferred are $-CO_2R$, -C(O)R, and -CN. Substituent R is an alkyl group having 1 to 20 carbon atoms, an aryl group having 6 to 20 carbon atoms, or an aralkyl group having 7 to 20 carbon atoms, and preferably an alkyl or phenyl group having 1 to 10 carbon atoms.

(e) A process of reacting a vinyl polymer having at least one carbon-halogen bond represented by the general formula (3) and produced by atom transfer radical polymerization with an elemental metal, such as zinc, or an organometallic compound to prepare an enolate anion, and then reacting the anion and an aldehyde or ketone.

(f) A process of reacting a vinyl polymer having at least one terminal halogen, preferably at least one halogen atom represented by the general formula (3), with a hydroxyl group-containing compound represented by the general formula (13) or the like, or with a hydroxyl group-containing compound represented by the general formula (14) or the like to substitute the halogen atom with a hydroxyl group-containing substituent.

$$HO-R^{16}-O^-M^+ \qquad (13)$$

(wherein $R^{16}$ and $M^+$ represent the same as the above.)

$$HO-R^{16}-C(O)O^-M^+ \qquad (14)$$

(wherein $R^{16}$ and $M^+$ represent the same as the above.)

Among processes (a) and (b) for introducing a hydroxyl group without directly involving a halogen atom, process (b) is more preferred from the viewpoint of ease of control.

Among processes (c) to (f) for introducing a hydroxyl group by converting the halogen atom of the vinyl polymer having at least one carbon-halogen bond, process (f) is more preferred from the viewpoint of ease of control.

The compound represented by the general formula (4) is preferably used in an amount of 1 to 10 equivalents

and more preferably 1 to 5 equivalents relative to the terminal hydroxyl group of the vinyl polymer.

The solvent used for carrying out the reaction is not particularly limited, but a polar solvent is preferred because the reaction is nucleophilic substitution reaction. Preferably used are tetrahydrofuran, dioxane, diethyl ether, acetone, dimethylsulfoxide, dimethylformamide, dimethylacetamide, hexamethylphosphoric triamide, and acetonitrile, etc.

The reaction temperature is not particularly limited, but it is preferably 0 to 150°C and more preferably 10 to 100°C.

<Introduction process 3>

Introduction process 3 includes reacting a vinyl polymer having a hydroxyl group at a terminus and a diisocyanate compound and then reacting the residual isocyanate group with a compound represented by the general formula (5):

$$HO\text{-}R'\text{-}OC(O)C(R^a)\text{=}CH_2 \qquad (5)$$

(wherein $R^a$ represents a hydrogen atom or an organic group having 1 to 20 carbon atoms, and R' represents a divalent organic group having 2 to 20 carbon atoms).

Organic group $R^a$ having 1 to 20 carbon atoms, which is in the general formula (5), is exemplified by the same as the above, and specific examples of $R^a$ include those exemplified by the same as the above.

As divalent organic group R' having 2 to 20 carbon atoms, which is represented by the general formula (5), for example, an alkylene group (ethylene, propylene, butylenes, or the like) having 2 to 20 carbon atoms, an alkylene group having 6 to 20 carbon atoms, an alkylene group having 7 to 20 carbon atoms, or the like can be used.

The compound represented by the general formula (5) is not particularly limited, but 2-hydroxypropyl methacrylate or the like is particularly preferred.

The vinyl polymer having a hydroxyl group at a terminus is as described above.

The diisocyanate compound is not particularly limited, and any known compound can be used. Specific examples of the compound include toluylene diisocyanate, 4,4'-diphenylmethane diisocyanate, hexamethylene diisocyanate, xylylene diisocyanate, metaxylylene diisocyanate, 1,5-naphthalene diisocyanate, hydrogenated diphenylmethane diisocyanate, hydrogenated toluylene diisocyanate, hydrogenated xylylene diisocyanate, and isophorone diisocyanate. These compounds can be used alone or in combination of two or more. Also, a block isocyanate may be used. In order to achieve higher weather resistance, a diisocyanate compound with no aromatic ring, such as hexamethylene diisocyanate or hydrogenated diphenylmethane diisocyanate, is preferably used.

The amount of the diisocyanate compound used is preferably 1 to 10 equivalents and more preferably 1 to 5 equivalents relative to the terminal hydroxyl group of the vinyl polymer.

The amount of the compound represented by the general formula (5) to be used is preferably 1 to 10 equivalents and more preferably 1 to 5 equivalents relative to the remaining isocyanate group.

The reaction solvent is not particularly limited, but an aprotic solvent is preferred.

The reaction temperature is not particularly limited, but it is preferably 0 to 250°C and more preferably 20 to 200°C.

There is a tendency for the raw materials and solvents, among others, used in the steps of polymerization, functional group introduction and purification to remain, in small amounts, in the (A) component vinyl polymer to be used in the practice of the invention. The present inventors found that some or other compound contained in the component (A) exerts influences on the photocation curability and, as a result of continued research works, found that N atom-containing compounds are the cause thereof, and succeeded in alleviating the insufficient curing problem with photoradical- and photocation-curable compositions.

Thus, it is necessary that the N atom-containing compound concentration in the component (A) to be used in the practice of the invention be not higher than 1,000 ppm. That concentration is preferably not higher than 500 ppm, more preferably not higher than 300 ppm. When the concentration is in excess of 1, 000 ppm, the cation curing of the epoxy component tends to be inhibited.

The "N atom-containing compound concentration in the component (A)" refers to the ratio N atom-containing compound(s) (g)/component (A) (g). The N atom-containing compound concentration in the component (A) can be determined by the working curve method, namely by using a gas chromatograph and measuring the peak(s) due to an N atom-containing compound (s), typically an amine and/or amide compound (s) in the (A) component vinyl polymer in comparison with reference samples.

The "N atom-containing compound" so referred to herein is not particularly restricted but includes compounds containing an N atom or atoms, in particular those which become cation curing inhibiting factors, for example amine compounds, amide compounds, imidazole compounds, triazine compounds, quinoline compounds, imine compounds, enamine compounds and ketimine compounds, among others.

By reducing the concentration of such N atom-containing compounds to 1, 000 ppm or below, it becomes

possible to improve the curability of the curable composition of the invention.

It is preferred that not only the content of the N atom-containing compounds mentioned above but also the content of other cation curing inhibiting substances such as basic substances and moisture in the (A) component vinyl polymer to be used in the practice of the invention be reduced.

The method of removing such N atom-containing compounds from the component (A) is not particularly restricted but includes, for example, the method using an ion exchange resin, the method comprising washing with an N atom-free polar solvent or water, the method comprising heating under reduced pressure, and the method using an adsorbent. Among these, the reduced pressure heating method and the adsorbent method are preferred from the viewpoint of simplicity and high removing effect.

The ion exchange resin to be used is not particularly restricted but includes, among others, strongly acidic cation exchange resins, weakly acidic cation exchange resins and chelating resins.

The N atom-free polar solvent is not particularly restricted but includes, among others, alcohols such as methanol, ethanol, n-propanol, 2-propanol, n-butanol, isobutanol, tert-butanol, ethylene glycol, diethylene glycol, propylene glycol and polypropylene triols; sulfoxide solvents such as dimethyl sulfoxide; ethers such as dimethyl ether, diethyl ether, isopropyl ether and tetrahydrofuran; cellosolves such as methylcellosolve, ethylcellosolve, butylcellosolve and cellosolve acetate; and ketones such as acetone, methyl ethyl ketone, methyl isobutyl ketone and cyclohexanone.

The adsorbent is not particularly restricted but includes, among others, alumina, diatomaceous earth, iron oxide, aluminum silicate, silica gel, silica-alumina gel, zeolite and active carbon.

<<Component (B)>>

The curable composition of the invention contains, as component (B), an epoxy compound and/or an oxetane compound.

The (B) component epoxy compound serves to reduce the viscosity of the component (A) and thereby improve the workability and, in addition, improve the strength of cured products.

The epoxy compound may be any epoxy group-containing compound. For example, there may be mentioned bisphenol-based epoxy resins and alicyclic epoxy resins.

Typical examples of the bisphenol-based epoxy resins are bisphenol A-based epoxy resins, bisphenol F-based epoxy resins, bisphenol AD-based epoxy resins, hydrogenated bisphenol A-based epoxy resins and hydrogenated bisphenol F-based epoxy resins, among others.

The term "hydrogenated" as used hereinabove refers to the hydrogenation of the benzene ring moiety to the cyclohexyl ring.

The alicyclic epoxy resins are typically compounds having a cyclohexene oxide group, tricyclodecene oxide group or cyclopentene oxide group, for instance. Specifically, there may be mentioned vinylcyclohexene diepoxide, vinylcyclohexene monoepoxide, 3,4-epoxycyclohexylmethyl 3,4-epoxycyclohexancarboxylate, 2-(3,4-epoxycyclohexyl-5,5-spiro-3,4-epoxy)cyclohexane-m-dioxane, bis(3,4-epoxycyclohexyl) adipate and bis(3,4-epoxycyclohexylmethylene) adipate.

Preferably, the epoxy compound has no aromatic ring so that inhibition of curing by light absorbed and discoloration after curing may be avoided.

In the practice of the invention, the above-mentioned epoxy compounds may be used singly or in combination of two or more species.

The (B) component oxetane compound reduces the viscosity of the component (A) and thereby improves the workability and, in addition, plays a role in improving the strength of cured products.

The oxetane compound is not particularly restricted but specifically includes 3-ethyl-3-hydroxymethyloxetane, 3-(meth)allyloxymethyl-3-ethyloxetane, (3-ethyl-3-oxetanylmethoxy)methylbenzene, 4-fluoro-[1-(3-ethyl-3-oxetanylmethoxy)methyl]benzene, 4-methoxy-[1-(3-ethyl-3-oxetanylmethoxy)methyl]benzene, [1-(3-ethyl-3-oxetanylmethoxy)ethyl] phenyl ether, isobutoxymetyl (3-ethyl-3-oxetanylmethyl) ether, isobornyloxyethyl (3-ethyl-3-oxetanylmethyl) ether, isobornyl (3-ethyl-3-oxetanylmethyl) ether, 2-ethylhexyl (3-ethyl-3-oxetanylmethyl) ether, ethyl diethylene glycol (3-ethyl-3-oxetanylmethyl) ether, dicyclopentadiene (3-ethyl-3-oxetanylmethyl) ether, dicyclopentenyloxyethyl (3-ethyl-3-oxetanylmethyl) ether, dicyclopentenylethyl (3-ethyl-3-oxetanylmethyl) ether, tetrahydrofurfuryl (3-ethyl-3-oxetanylmethyl) ether, tetrabromophenyl (3-ethyl-3-oxetanylmethyl) ether, 2-tetrabromophenoxyethyl (3-ethyl-3-oxetanylmethyl) ether, tribromophenyl (3-ethyl-3-oxetanylmethyl) ether, 2-tribromophenoxyethyl (3-ethyl-3-oxetanylmethyl) ether, 2-hydroxyethyl (3-ethyl-3-oxetanylmethyl) ether, 2-hydroxypropyl (3-ethyl-3-oxetanylmethyl) ether, butoxyethyl (3-ethyl-3-oxetanylmethyl) ether, pentachlorophenyl (3-ethyl-3-oxetanylmethyl) ether, pentabromophenyl (3-ethyl-3-oxetanylmethyl) ether, bornyl (3-ethyl-3-oxetanylmethyl) ether, 3,7-bis(3-oxetanyl)-5-oxanonane, 1,4-bis[(3-ethyl-3-oxetanylmethoxy)methyl]benzene, 1,2-bis[(3-ethyl-3-oxetanylmethoxy)methyl]ethane, 1,2-bis[(3-ethyl-3-oxetanylmethoxy)methyl]propane, ethylene glycol bis(3-ethyl-3-oxetanylmethyl) ether, dicyclopentenyl bis(3-ethyl-3-oxetanylmethyl) ether, triethylene glycol bis(3-ethyl-3-oxetanylmethyl) ether, tetraethylene glycol bis(3-ethyl-3-oxetanylmethyl) ether, tricyclodecanediyldimethylene bis(3-ethyl-3-oxetanylmethyl) ether, 1,4-bis[(3-ethyl-3-oxetanylmethoxy)methyl]butane, 1,6-bis[(3-ethyl-3-oxetanylmethoxy)methyl]hexane, polyethylene glycol bis(3-ethyl-3-oxetanylmethyl) ether, ethylene oxide (EO)-modified bisphenol A bis(3-ethyl-3-oxetanylmethyl) ether, propylene oxide (PO) -modified bisphenol A bis(3-ethyl-3-oxetanylmethyl) ether, EO-modified hydrogenated bisphenol A bis(3-ethyl-3-oxetanylmethyl) ether, PO-modified hydrogenated bisphenol A bis (3-ethyl-3-oxetanylmethyl) ether, EO-modified bisphenol F bis(3-ethyl-3-oxetanylmethyl) ether, trimethylolpropane tris(3-ethyl-3-oxetanylmethyl) ether, pentaerythritol tris(3-ethyl-3-oxetanylmethyl) ether, pentaerythritol tetrakis(3-ethyl-3-oxetanylmethyl) ether, dipentaerythritol hexakis(3-ethyl-3-oxetanylmethyl) ether, dipentaerythritol pentakis(3-ethyl-3-oxetanylmethyl) ether, dipentaerythritol tetrakis(3-ethyl-3-oxetanylmethyl) ether, caprolactone-modified dipentaerythritol hexakis(3-ethyl-3-oxetanylmethyl) ether, ditrimethylolpropane tetrakis(3-ethyl-3-oxetanylmethyl) ether, xylylenedioxetane, bis(3-ethyl-3-oxetanylmethyl) ether, 3-ethyl-3-phenoxymethyloxetane, 3-ethyl-3-(2-ethylhexyloxymethyl)oxetane, 3-ethyl-3-{[3-(triethoxysilyl)propoxy]methyl}oxetane, oxetanylsilsesquioxane, phenol novolak oxetane, oxetane, methyloxetane, oxetan-2-one, 4-methylideneoxetan-2-one, oxetane-2,4-dione, di[1-ethyl-(3-oxetanyl)]methyl ether, 1,4-bis[[(3-ethyl-oxetanyl)methoxy]methyl]benzene, and oligomers thereof.

Preferably, the oxetane compound has no aromatic ring so that inhibition of curing by light absorbed and discoloration after curing may be avoided.

In the practice of the invention, the above-mentioned oxetane compounds may be used singly or two or more of them may be used in combination.

The component (B) is used preferably in an amount of 10 to 200 parts by weight (hereinafter, "part (s) by weight" is also referred to as "part (s) " for short), more preferably 20 to 150 parts, per 100 parts of the component (A). When the amount of the component (B) used is smaller than 10 parts, the strength-increasing effect tends to be insufficient and, when it is above 200 parts, there is a tendency for a sufficient level of elongation to be hardly obtained.

As already mentioned hereinabove, N atom-containing compounds tend to be contained in the (A) component vinyl polymer and these N atom-containing compounds tend to exert influences on the photocationic curing of the component (B). Therefore, the N atom-containing compound concentration relative to the component (B) is required to be not higher than 2, 300 ppm, preferably not higher than 1, 200 ppm, more preferably not higher than 700 ppm. When the concentration in question exceeds 2,300 ppm, the curability of the component (B) tends to decrease.

The "N atom-containing compound concentration relative to the component (B)" so referred to herein means the value obtained by multiplying the N atom-containing compound concentration in the component (A) by the content ratio of the component (A) to the component (B).

N atom-containing compound concentration (ppm) relative to component (B) = N atom-containing compound concentration (ppm) in component (A) x [content (mass) of component

(A)/content (mass) of component (B)]

<<Component (C)>>

A (C) component photoradical polymerization initiator can also be used in the curable composition of the invention for causing photocuring of the component (A).

The (C) component photoradical polymerization initiator is not particularly restricted but includes, as specific examples, acetophenone, propiophenone, benzophenone, xanthol, fluoreine, benzaldehyde, anthraquinone, triphenylamine, carbozole, 3-methylacetophenone, 4-methylacetophenone, 3-pentylacetophenone, 2,2-diethoxyacetophenone, 2,2-dimethoxy-1,2-diphenylethan-1-one, 1-hydroxycyclohexyl phenyl ketone, 2-hydroxy-2-methyl-1-phenylpropan-1-one, 4-methoxyacetopohenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoyl, benzoin methyl ether, benzoin butyl ether, bis(4-dimethylaminophenyl) ketone, benzylmethoxyketal, 2-chlorothioxanthone, bis(2,4,6-trimethylbenzoyl)phenylphosphine oxide, bis(2,6-dimethoxybenzoyl)-2,4,4-trimethylpentylphosphine oxide, 2,4,6-trimethylbenzoyldipenylphosphine oxide and the like.

Preferred among these are 2,2-diethoxyacetophenone, 2,2-dimethoxy-1,2-diphenylethan-1-one, 1-hydroxycyclohexyl phenyl ketone, 2-hydroxy-2-methyl-1-phenylpropan-1-one and bis(2,4,6-trimethylbenzoyl)phenylphosphine oxide.

These photoradical polymerization initiators can be used alone, or in combination with another compound. As specific example, the initiator may be combined with an amine, such as diethanolmethylamine, dimethylethanolamine, or triethanolamine, and further combined with an iodonium salt such as diphenyl iodonium chloride, or a dye, such as methylene blue, and an amine.

When the photoradical polymerization initiator is used, if required, a polymerization inhibitor, such as hydroquinone, hydroquinone monomethyl ether, benzoquinone, para-tert-butyl catechol may be added.

Furthermore, a near-infrared light absorbing cationic dye may be used as a near-infrared photoradical polymerization initiator.

As the near-infrared light absorbing cationic dye, a dye which is excited with light energy in a range of 650 nm to 1,500 nm, for example, the near-infrared light absorbing cationic dye-borate anion complex disclosed in Japanese Kokai Publication Hei-03-111402 and Hei-05-194619, is preferably used. A boron-based sensitizing agent is more preferably combined.

In cases where a photoradical polymerization initiator (C) is used, the level of addition thereof is not particularly restricted but is only required to be sufficient to photofunctionalize the system to a slight extent; thus, it is preferably 0.001 to 10 parts, more preferably 0.05 to 5 parts, per 100 parts of the component (A).

«Component (D) »

A (D) component photocationic polymerization initiator can further be used in the curable composition of the invention for inducing ring opening of the (B) component epoxy compound and/or oxetane compound.

The photocationic polymerization initiator is not particularly restricted but may be any compound capable of inducing the ring opening of the epoxy group or oxetane ring upon photoirradiation; thus, it includes aromatic diazonium salts, aromatic iodonium salts, aromatic sulfonium salts and acid-generating substances, among others.

Specifically, mention may be made of bis(cyclohexylsulfonyl)diazomethane, bis(tert-butylsulfonyl)diazomethane, bis(p-toluenesulfonyl)diazomethane, p-methoxybenzenediazonium hexafluoroantimonate and like aromatic diazonium salts; diphenyliodonium hexafluoroantimonate, diphenyliodonium hexafluorophosphate, (tolylcumyl)iodonium tetrakis(pentafluorophenyl)borate, bis(alkyl(C=10-14)phenyl)iodonium hexafluorophosphate and like aromatic iodonium salts; tri(alkylphenyl)sulfonium hexafluoroantimonates, triphenylsulfonium hexafluoroantimonate, triphenylsulfonium hexafluoroarsinate, triphenylsulfonium hexafluoroborate and like aromatic sulfonium salts; diphenyl-2,4,6-trimethylphenylsulfonium p-toluenesulfonate, diphenyl-4-methylphenylsulfonium trifluoromethanesulfonate, triphenylsulfonium trifluoromethanesulfonate and like acid-generating substances, among others. Among these, aromatic sulfonium salts are preferred.

As available products, there may be mentioned Asahi Denka Kogyo' s Optomer SP150, Optomer SP170 and Optomer SP172, General Electric's UVE 1014 and Sartomer's CD 1012, among others.

In cases where a photocationic polymerization initiator (D) is used, the level of addition thereof is not particularly restricted but, from the curability viewpoint, it is preferably 0.1 to 15 parts per 100 parts of the sum of the (B) component epoxy compound and oxetane compound; from the viewpoint of balanced physical properties of cured products, it is more preferably 0.3 to 8.0 parts on the same basis.

<<Component (E)>>

At least one compound selected from the group consisting of epoxy group- and (meth)acryloyl type group-containing compounds, oxetane group- and (meth)acryloyl type group-containing compounds and epoxy group-, oxetane group- and (meth)acryloyl type group-containing compounds can be used as the component (E) in the curable composition of the invention.

The above-mentioned (E) component compound can be used as a compound for crosslinking the component (A) with the component (B) for further improvements in mechanical strength and elongation, according to need.

The epoxy group- and (meth)acryloyl type group-containing compounds are not particularly restricted but may be glycidyl (meth)acrylate and the like. Glycidyl methacrylate is preferred from the availability viewpoint, among others.

The oxetane group- and (meth)acryloyl type group-containing compounds are not particularly restricted but include (3-methyl-3-oxetanyl)methyl (meth)acrylate, (3-ethyl-3-oxetanyl)methyl (meth)acrylate and terephthalatobisoxetane polycarbonate diol diacrylate and the like.

The epoxy group-, oxetane group- and (meth) acryloyl type group-containing compounds are not particularly restricted but may be any compounds containing those three group species.

In cases where one or more components (E) are used, the level of addition of the sum of them is preferably 0.1 to 30 parts, more preferably 0.5 to 20 parts, per 100 parts of the sum of the component (A) and component (B) from the viewpoint of the balance among mechanical strength, elongation, compound's viscosity and compound's thixotropic properties.

«Curable composition»

The curable composition of the invention comprises the above-mentioned components (A) and (B) and may further comprise one or more of the components (C), (D) and (E). If necessary, another or other ingredients may be added to the composition.

In the practice of the invention, the concentration, in the curable composition as a whole, of compounds acting

as photocation curing-inhibiting factors is preferably held down to a low level so that the effect of improving the curability of the photoradical- and photocation-curable composition may be produced. Thus, the content of N atom-containing compounds etc. including, but being not limited to, amine compounds, amide compounds, imidazole compounds, triazine compounds, quinoline compounds, imine compounds, enamine compounds and ketimine compounds, among others, is preferably held down to a low level. The content of basic substances, moisture and other cation curing-inhibiting substances other than the above-mentioned N atom-containing compounds is also preferably reduced.

In the curable composition of the present invention, polymerizable monomers and/or oligomers, various additives, organic solvents and the like can be added for improving surface curability, imparting toughness, decreasing the viscosity to improve workability, or the like.

<Polymerizable monomer and/or oligomer>

As the polymerizable monomer and/or oligomer, a monomer and/or oligomer having a radical polymerizable group or a monomer and/or oligomer having an anionic polymerizable group is preferred in terms of curability.

Examples of the radical polymerizable group include (meth)acryloyl type groups, such as a (meth)acryl group, a styrene group, an acrylonitrile group, a vinylester group, an N-vinylpyrrolidone group, an acrylamide group, a conjugated diene group, a vinyl ketone group, a vinyl chloride group, and the like. In particular, a monomer and/or oligomer having a (meth) acryloyl type group similar to the vinyl polymer used in the present invention is preferred.

Examples of the anionic polymerizable group include (meth)acryloyl type groups, such as a (meth)acryl group, a styrene group, an acrylonitrile group, an N-vinylpyrrolidone group, an acrylamide group, a conjugated diene group, a vinyl ketone group, and the like. In particular, a monomer and/or oligomer having a (meth) acryloyl type group similar to the vinyl polymer used in the present invention is preferred.

As specific examples of the above-mentioned monomers, there may be mentioned (meth)acrylate monomers, cyclic acrylates, styrenic monomers, acrylonitrile, vinyl ester monomers, N-vinylpyrrolidone, acrylamide monomers, conjugated diene monomers, vinyl ketone monomers, vinyl halide and vinylidene halide monomers and polyfunctional monomers, among others.

As the (meth)acrylate monomers, there may be mentioned methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, isooctyl (meth)acrylate, 2-ethylhexyl (meth)acrylate, nonyl (meth)acrylate, isononyl (meth) acrylate, decyl (meth) acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, $\gamma$-(methacryloyloxypropyl)trimethoxysilane, (meth)acrylic acid-ethylene oxide adducts, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylethyl (meth)acrylate, 2-perfluorohexylethyl (meth)acrylate, 2-perfluorodecylethyl (meth)acrylate, 2-perfluorohexadecylethyl (meth) acrylate and so forth. The compounds represented by the following formulae may also be mentioned. In the following formulae, n represents an integer of 0 to 20.

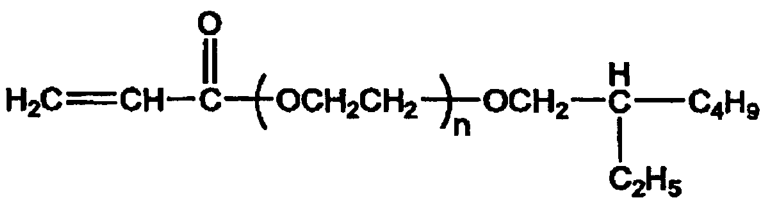

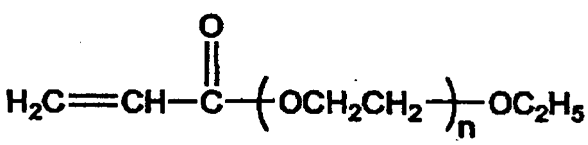

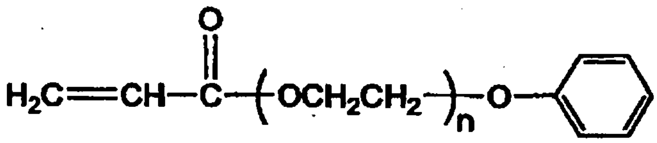

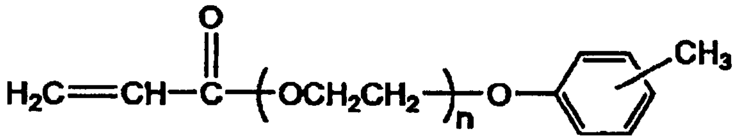

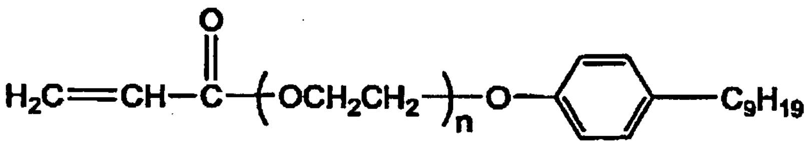

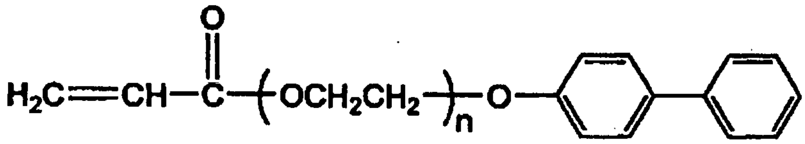

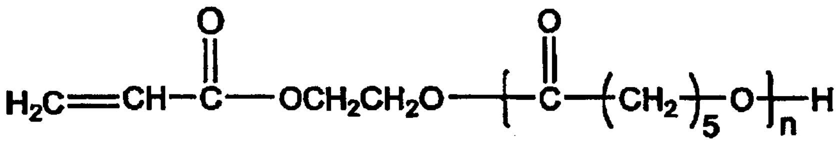

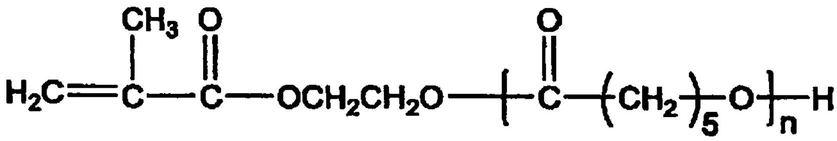

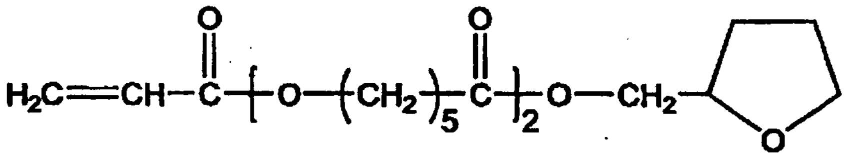

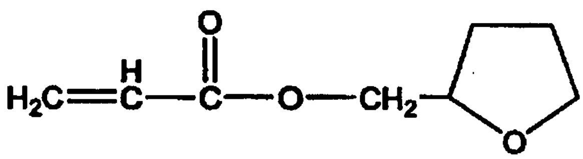

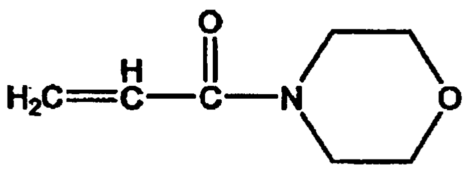

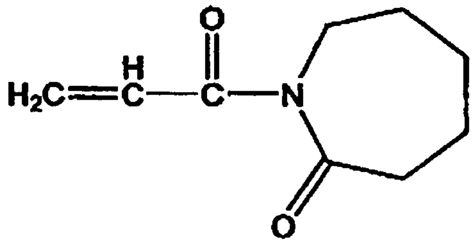

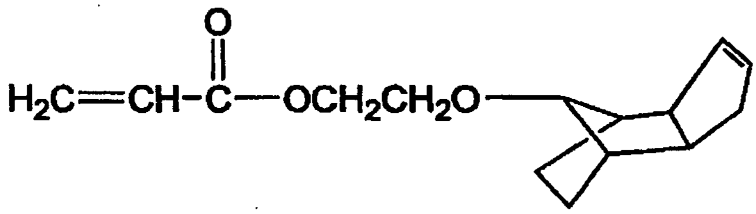

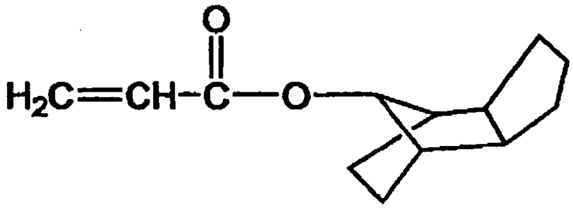

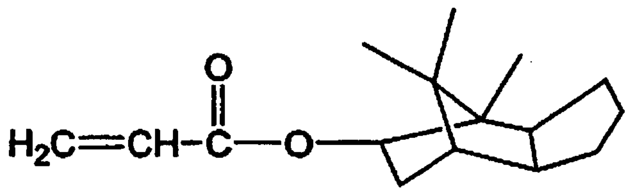

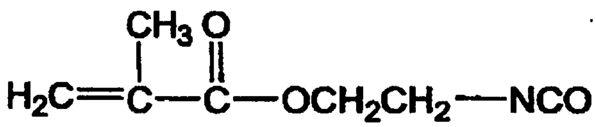

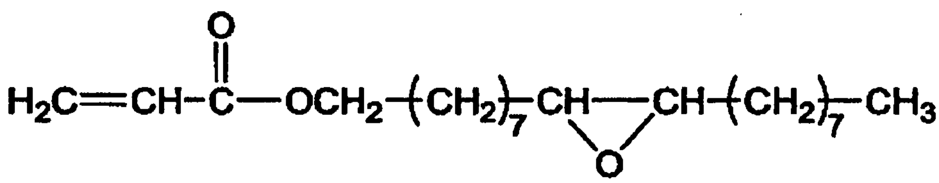

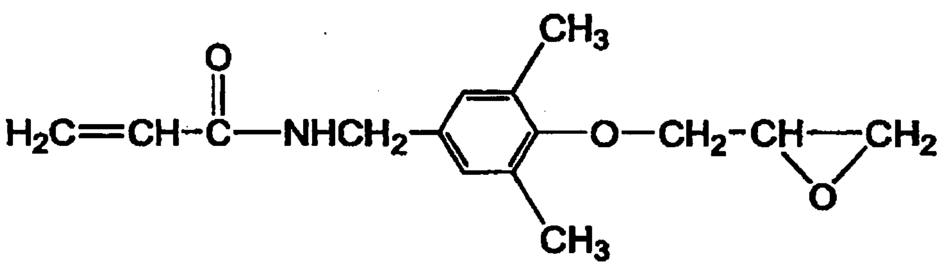

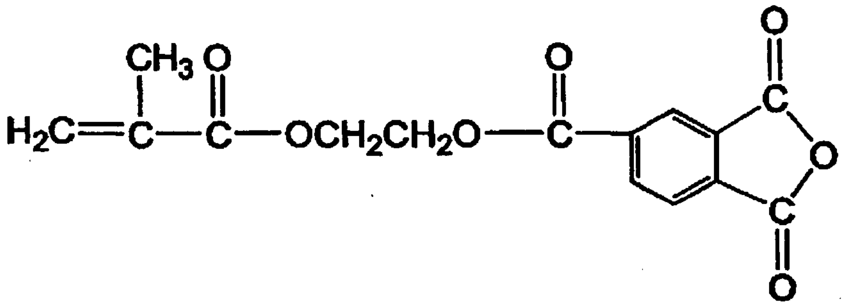

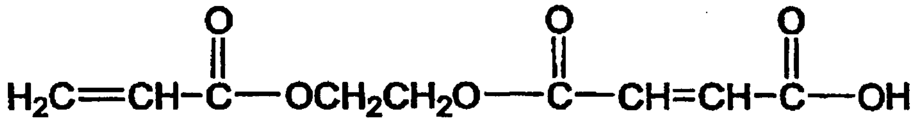

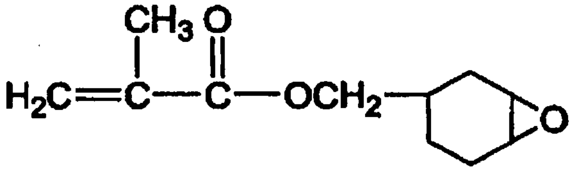

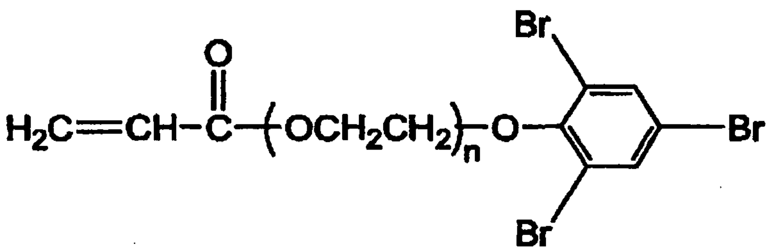

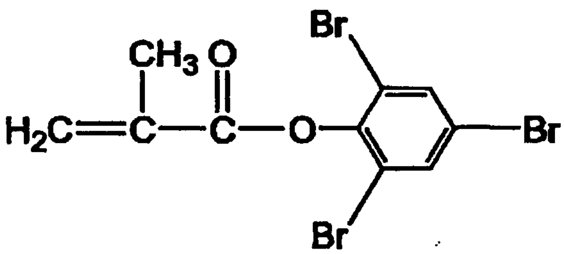

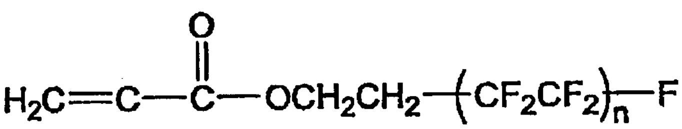

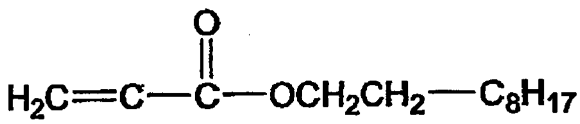

Examples of the styrene monomers include styrene and α-methylstyrene, among others.

Examples of the vinyl ester monomers include vinyl acetate, vinyl propionate, and vinyl butyrate, among others.

Examples of the acrylamide monomers include acrylamide and N,N-dimethylacrylamide, among others.

Examples of the conjugated diene monomers include butadiene and isoprene, among others.

Example of the vinyl ketone monomers include methyl vinyl ketone, among others.

Example of the vinyl halide or vinylidene halide monomers include vinyl chloride, vinyl bromide, vinyl iodide,

vinylidene chloride and vinylidene bromide, among others.

Examples of polyfunctional monomers include trimethylolpropane triacrylate, neopentylglycol polypropoxydiacrylate, trimethylolpropane polyethoxytriacrylate, bisphenol F polyethoxydiacrylate, bisphenol A polyethoxydiacrylate, dipentaerythritol polyhexanolide hexacrylate, tris(hydroxyethyl)isocyanurate polyhexanolide triacrylate, tricyclodecanedimethylol diacrylate 2-(2-acryloyloxy-1,1-dimethyl)-5-ethyl-5-acryloyloxymethyl-1,3-dioxane, tetrabromobisphenol A diethoxydiacrylate, 4,4-dimercaptodiphenyl sulfide dimethacrylate, polytetraethylene glycol diacrylate, 1,9-nonanediol diacrylate, and ditrimethylolpropane tetraacrylate.

Examples of the oligomer include epoxy acrylate resins, such as bisphenol A epoxy acrylate resins, phenol novolac epoxy acrylate resins, cresol novolac epoxy acrylate resins, and COOH-modified epoxy acrylate resins; urethane acrylate resins prepared by reacting urethane resins with a hydroxyl group-containing (meth)acrylate [hydroxyethyl (meth)acrylate, hydroxypropyl (meth)acrylate, hydroxylbutyl (meth)acrylate, pentaerythritol triacrylate, or the like], the urethane resins being prepared from polyols (polytetramethylene glycol, polyester diol of ethylene glycol and adipic acid, ε-caprolactone-modified polyester diol, polypropylene glycol, polyethylene glycol, polycarbonate diol, hydroxyl group-terminated hydrogenated polyisoprene, hydroxyl group-terminated polybutadiene, hydroxyl group-terminated polyisobutylene, and the like) and organic isocyanates (tolylene diisocyanate, isophorone diisocyanate, diphenylmethane diisocyanate, hexamethylene diisocyanate, xylylene diisocyanate, and the like); resins prepared by introducing (meth)acryl groups in the polyols through ester bonds; polyester acrylate resins.

In particular, the monomer and/or oligomer having a (meth)acryloyl type group is preferred. The number-average molecular weight of the monomer and/or oligomer having a (meth) acryloyl type group is preferably 5, 000 or less. In order to improve surface curability and decrease viscosity for improving workability, the molecular weight of the monomer used is more preferably 1, 000 or less because of high compatibility.

The level of addition of the polymerizable monomer and/or oligomer to be used is preferably 1 to 200 parts, more preferably 5 to 100 parts, per 100 parts of the sum of the component (A) and the component (B) from the viewpoints for improving surface curability, imparting toughness, or decreasing the viscosity to improve workability.

<Various additives>

Various additives and the like can be added to the curable composition of the present invention for modifying physical properties thereof.

<Solvent>

Organic solvent can be added to the curable composition of the present invention from the viewpoints of excellent workability in coating, excellent drying property before and after curing, and the like.

In general, an organic solvent having a boiling point of 50 to 180°C is preferred in view of excellent workability in coating and excellent drying property before and after curing. Specific examples of the solvent include alcohol solvents, such as methanol, ethanol, isopropanol, n-butanol, and isobutanol; ester solvents, such as methyl acetate, ethyl acetate, butyl acetate, ethylene glycol monoethyl ether, ethylene glycol monoethyl ether acetate, and ethylene glycol monobutyl ether; ketone solvents, such as acetone, methyl ethyl ketone, and methyl isobutyl ketone; aromatic hydrocarbon solvents, such as toluene and xylene; and cyclic ether solvents, such as dioxane. These solvents can be used alone or as a mixture of at least two.

The level of addition of the organic solvent to be used is preferably 1 to 900 parts per 100 parts of the sum of the component (A) and the component (B) from the viewpoints of the balance between the end result of the cured product, workability and dryness.

<Reinforcing silica>

From the viewpoint of improvement in strength of a cured product etc., reinforcing silica can be advantageously added to the curable composition of the present invention.

As the reinforcing silica, fumed silica, precipitated silica, or the like can be used. In particular, silica having a particle size of 50 μm or less and a specific surface area of 80 $cm^2/g$ or more is preferred from the viewpoint of a reinforcing effect. The method for determining the specific surface area will be mentioned below.

Surface-treated silica, for example, silica surface-treated with organosilane, organosilazane, diorganocyclopolysiloxane, or the like, is more preferred because flowability suitable for molding is easily exhibited.

Specific examples of the reinforced silica include, but not limited to, fumed silica, e.g., Aerosil manufactured by Nippon Aerosil Co., Ltd., and precipitated silica, e.g., Nipsil manufactured by Nihon Silica Kogyo.

The reinforcing silica may be used alone or two or more types of silica may be combined.

The amount of the reinforcing silica added is not particularly limited, but the amount is preferably 0.1 to 100

parts, more preferably 0.5 to 80 parts, and still more preferably 1 to 50 parts relative to 100 parts of the sum of the component (A) and the component (B) . When the adding amount is less than 0.1 part, the effect of improving reinforcement may be insufficient. When the adding amount exceeds 100 parts, the workability of the curable composition may degrade.

<Filler>

The curable composition of the present invention may further contain any one of various fillers other than the reinforcing silica according to demand.

Examples of the filler include, but not limited to, reinforcing fillers, such as wood flour, pulp, cotton chips, asbestos, glass fibers, carbon fibers, mica, walnut shell flour, chaff flour, graphite, diatomite, white clay, dolomite, silicic anhydride, hydrous silicic acid, and carbon black; fillers, such as heavy calcium carbonate, colloidal calcium carbonate, magnesium carbonate, diatomite, calcined clay, clay, talc, titanium oxide, bentonite, organic bentonite, ferric oxide, colcothar, aluminum fine powder, flint powder, zinc oxide, active zinc white, zinc powder, zinc carbonate, and Shirasu balloon; and fibrous fillers, such as asbestos, glass fibers and glass filaments, carbon fibers, Kevlar fibers, and polyethylene fibers. Among these fillers, carbon black, calcium carbonate, titanium oxide, and talc are preferred. When a cured product with low strength and high elongation is desired, a filler mainly selected from titanium oxide, calcium carbonate, talc, ferric oxide, zinc oxide, and Shirasu balloon can be added.

In general, calcium carbonate having a small specific surface area may have the insufficient effect of improving the breaking strength, breaking elongation, adhesiveness, and weatherproof adhesiveness of the cured product. Use of calcium carbonate having a larger specific surface area increases the effect of improving the breaking strength, breaking elongation, adhesiveness, and weatherproof adhesiveness of the cured product. Furthermore, calcium carbonate is more preferably surface-treated with a surface treatment agent. Use of surface-treated calcium carbonate possibly improves the workability of the composition of the present invention and further improves the effect of improving the adhesiveness and weatherproof adhesiveness of the curable composition, as compared with use of calcium carbonate not surface-treated.

As the surface treatment agent, an organic compound or surfactant, such as a fatty acid, fatty acid soap, or a fatty acid ester, or a coupling agent, such as a silane coupling agent or a titanate coupling agent, can be used. Specific examples of the surface treatment agent include, but not limited to, fatty acids, such as caproic acid, caprylic acid, pelargonic acid, capric acid, undecanoic acid, lauric acid, myristic acid, palmitic acid, stearic acid, behenic acid, and oleic acid; sodium and potassium salts of these fatty acids; alkyl esters of these fatty acids; and the like.

Specific examples of the surfactant include sulfate-type anionic surfactants, such as sodium, potassium and other salts of polyoxyethylene alkyl ether sulfates, long-chain alcohol sulfates and the like; sulfonic acid-type anionic surfactants, such as sodium, potassium and other salts of alkylbenzenesulfonic acid, alkylnaphthalenesulfonic acid, paraffin sulfonic acid, $\alpha$-olefin sulfonic acid, alkylsulfosuccinic acid and the like.

The amount of the surface treatment agent used is preferably in a range of 0.1 to 20% by weight (hereinafter, referred to as %) and more preferably in a range of 1 to 5% relative to calcium carbonate. When the amount of the surface treatment agent is less than 0.1%, the effect of improving workability, adhesiveness, and weatherproof adhesiveness may become unsatisfactory. When the amount exceeds 20%, the storage stability of the curable composition may degrade.

In use of calcium carbonate, colloidal calcium carbonate is preferably used for particularly expecting the effect of improving the thixotropy of the resultant mixture and the breaking strength, breaking elongation, adhesiveness, and weatherproof adhesiveness of the cured product. However, the purpose of use is not limited to this.

On the other hand, heavy calcium carbonate may be added for decreasing the viscosity of the resultant mixture, increasing the amount thereof, and decreasing the cost. In use of the heavy calcium carbonate, the heavy calcium carbonate described below can be used according to demand.

The heavy calcium carbonate is prepared by mechanically grinding and processing natural chalk (whiting), marble, limestone, or the like. The grinding process can be a dry process or wet process. In many cases, a product of wet grinding degrades the storage stability of the curable composition of the present invention and is thus undesirable. The ground heavy calcium carbonate is sorted to form products having various average particle sizes. When the effect of improving the breaking strength, breaking elongation, adhesiveness, and weatherproof adhesiveness of the cured product is expected, the specific surface area is, but not limited to, preferably 1.5 $m^2/g$ to 50 $m^2/g$, further preferably 2 $m^2/g$ to 50 $m^2/g$, more preferably 2.4 $m^2/g$ to 50$m^2/g$, and particularly preferably 3 $m^2/g$ to 50 $m^2/g$. With a specific surface area of less than 1.5 $m^2/g$, the improving effect may be insufficient. Of course, this does not apply to a case in which the heavy calcium carbonate is added only for decreasing the viscosity or increasing the amount.

The specific surface area is measured by an air permeability method (a method for determining a specific surface area from air permeability to a powder-packed layer) according to JIS K 5101. As a measuring device, a SS-100 model specific surface area meter manufactured by Shimadzu Corporation is preferably used.

The above-listed filters may be used alone or in combination of two or more if necessary. For example, when heavy calcium carbonate with a specific surface area of 1.5 $m^2/g$ or more and colloidal calcium carbonate are combined according to demand, an increase in viscosity of the resultant mixture can be moderately suppressed, and the significant effect of improving the breaking strength, breaking elongation, adhesiveness, and weatherproof adhesiveness of the cured product can be expected. However, the combination is not particularly limited to this.
The fillers may be used alone or in combination of two or more.
When the filler is used, the filler is preferably added in an amount in a range of 5 to 1,000 parts, more preferably in a range of 10 to 500 parts, and particularly preferably in a range of 20 to 300 parts relative to 100 parts of the sum of the component (A) and the component (B). When the mixing amount is less than 5 parts, the effect of improving the breaking strength, breaking elongation, adhesiveness, and weatherproof adhesiveness of the cured product may become insufficient. When the mixing amount exceeds 1, 000 parts, the workability of the curable composition may degrade.

<Adhesiveness imparting resin>

The curable composition of the present invention preferably includes a (meth) acrylic polymer as a main component, and thus an adhesiveness imparting resin need not necessarily be added. However, any one of various resins can be added. Specific examples of the resins include phenol resins, modified phenol resins cyclopentadiene-phenol resins, xylene resins, coumarone resins, petroleum resins, terpene resins, terpene phenol resins, and rosin ester resins.
The level of addition of the adhesiveness imparting resin to be used is preferably 0.1 to 100 parts per 100 parts of the sum of the component (A) and the component (B) from the viewpoint of the balance between mechanical property of the cured product, heat resistance, oil resistance and adhesiveness.

<Antiaging agent>

The curable composition of the present invention can contain an antiaging agent for modifying physical properties.
The antiaging agent is not necessarily required because the acrylic polymer originally has excellent heat resistance, weather resistance, and durability. However, a conventional known antioxidant or photo-stabilizer can be appropriately used. The antiaging agent can be also used for controlling the polymerization, thereby controlling the physical properties.
Known examples of the antioxidant include, but not limited to, various antioxidants, such as the antioxidants described in "Antioxidant Handbook" issued by Taisei Corporation, and the antioxidants described in "Deterioration and Stabilization of Polymer Material" issued by CMC Chemical (235-242) .
Specific examples of the antioxidants include thioether-based antioxidants, such as MARK PEP-36 and MARK AO-23 (both manufactured by Adeka Argus Chemical Co., Ltd.); and phosphorus-based antioxidants, such as Irgafos 38, Irgafos 168, and Irgafos P-EPQ (all manufactured by Ciba Specialty Chemicals); hindered phenol compounds. In particular, the hindered phenol compounds below are preferred.
Specific examples of the hindered phenol compounds include 2,6-di-tert-butyl-4-methylphenol, 2,6-di-tert-butyl-4-ethylphenol, mono(di or tri)($\alpha$-methylbenzyl)phenol, 2,2'-methylenebis(4-ethyl-6-tert-butylphenol), 2,2'-methylenebis(4-methyl-6-tert-butylphenol), 4,4'-butylidenebis(3-methyl-6-tert-butylphenol), 4,4'-thiobis(3-methyl-6-tert-butylphenol), 2,5-di-tert-butylhydroquinone, 2,5-di-tert-amylhydroquinone, triethylene glycol-bis -[3-(3-tert-butyl-5-methyl-4-hydroxyphenyl)propionate], 1,6-hexanediol-bis [3-(3,5-di-tert-butyl-4-hydroxyphenyl)propionate], 2,4-bis-(n-octylthio)-6 -(4-hydroxy-3,5-di-tert-butylanilino)-1,3,5-triazine, pentaerythrityl-tetrakis [3-(3,5-di-tert-butyl-4-hydroxyphenyl)propionate], 2,2-thio-diethylenebis [3-(3,5-di-tert-butyl-4-hydroxyphenyl)propionate], octadecyl-3-(3,5-di-tert-butyl-4-hydroxyphenyl)propionate, N,N'-hexamethylenebis (3,5-di-tert-butyl-4-hydroxy-hydrocinnamide), 3,5-di-tert-butyl-4-hydroxybenzylphosphonate diethyl ester, 1,3,5-trimethyl-2,4,6-tris (3,5-di-tert-butyl-4-hydroxybenzyl)benzene, bis(3,5-di-tert-butyl-4-hydroxybenzylphosphonate ethyl) calcium, tris-(3,5-di-tert-butyl-4-hydroxybenzyl) isocyanurate, 2,4-2,4-bis[(octylthio)methyl] o-cresol, N,N'-bis[3-(3,5-di-tert-butyl-4-hydroxyphenyl)propionyl] hydrazine, tris(2,4-di-tert-butylphenyl)phosphite, 2-(5-methyl-2-hydroxyphenyl)benzotriazole, 2-[2-hydroxy-3,5-bis($\alpha$,$\alpha$-dimethylbenzyl)phenyl] -2H-benzotriazole, 2-(3,5-di-tert-butyl-2-hydroxyphenyl)benzotriazole, 2-(3-tert-butyl-5-methyl-2-hydroxyphenyl) -5-chlorobenzotriazole, 2-(3,5-di-tert-butyl-2-hydroxyphenyl)-5-chlorobenzotriazole, 2-(3,5-di-tert-amyl-2-hydroxyphenyl)benzotriazole, 2-(2'-hydroxy-5'-tert-octylphenyl)-benzotriazole, methyl-3-[3-tert-butyl-5-(2H-benzotriazol-2-yl)-4 -hydroxyphenyl]propionate-polyethylene glycol (molecular weight about 300) condensates, hydroxyphenylbenzotriazole derivatives, 2-(3,5-di-tert-butyl-4-hydroxybenzyl)-2-n-butylmalonate bis(1,2,2,6,6-pentamethyl-4-piperidyl), and 2,4-di-tert-butylphenyl-3,5-di-tert-butyl-4-hydroxybenzoate.
Examples of commercial products include, but not limited to, NOCRAC 200, NOCRAC M-17, NOCRAC SP, NOCRAC SP-N, NOCRAC NS-5, NOCRAC NS-6, NOCRAC NS-30, NOCRAC 300, NOCRAC NS-7, and NOCRAC DAH (all manufactured by Ouchi Shinko Chemical Industries Co.) ; MARK AO-30, MARK AO-40, MARK AO-50, MARK

AO-60, MARK AO-616, MARK AO-635, MARK AO-658, MARK AO-80, MARK AO-15, MARK AO-18, MARK 328, and MARK AO-37 (all manufactured by Adeka Argus Chemical Co., Ltd.); IRGANOX-245, IRGANOX-259, IRGANOX-565, IRGANOX-1010, IRGANOX-1024, IRGANOX-1035, IRGANOX-1076, IRGANOX-1081, IRGANOX-1098, IRGANOX-1222, IRGANOX-1330, and IRGANOX-1425WL (all manufactured by Ciba Specialty Chemicals) ; and Sumilizer GA-80 (manufactured by Sumitomo Chemical Co., Ltd.).

Other examples include monoacrylate phenol antioxidants each having an acrylate group and a phenol group; and nitroxide compounds.

Specific examples of the monoacrylate phenol antioxidants include
2-tert-butyl-6-(3-tert-butyl-2-hydroxy-5-methylbenzyl)-4 -methylphenyl acrylate (product name, Sumilizer GM), and 2,4-di-tert-amyl-6-[1-(3,5-di-tert-amyl-2-hydroxyphenyl) ethyl]phenyl acrylate (product name, Sumilizer GS).

The above-mentioned monoacrylate phenol antioxidants can control the rate/curability of photoradical curing, improve cured products in elongation and facilitate the control of physical properties of cured products. The monoacrylate phenol antioxidants may be used singly or two or more of them may be used in combination.

Specific examples of the nitroxide compounds include, but not limited to, nitroxy free radicals derived from cyclic hydroxyamines, such as 2,2,6,6-substituted-1-piperidinyloxy radical and 2,2,5,5-substituted-1-pyrrolidinyloxy radical. As a substituent, an alkyl group having 4 or less carbon atoms, such as methyl or ethyl, is suitable.

Specific examples of the nitroxy free radicals include, but not limited to, 2,2,6,6-tetramethyl-1-piperidinyloxy radical (TEMPO), 2,2,6,6-tetraethyl-1-piperidinyloxy radical, 2,2,6,6-tetramethyl-4-oxo-1-piperidinyloxy radical, 2,2,5,5-tetramethyl-1-pyrrolidinyloxy radical, 1,1,3,3-tetramethyl-2-isoindolinyloxy radical, and N,N-di-tert-butylaminoxy radical.

Instead of the nitroxy free radical, a stable free radical such as galvinoxyl free radical may be used.

The antioxidant may be combined with a photo-stabilizer, and the combination is preferred because the effect is further exhibited, and heat resistance may be particularly improved. A mixture of an antioxidant and a photo-stabilizer, such as Tinuvin C353 or Tinuvin B75 (both manufactured by Ciba Specialty Chemicals), may be used.

The level of addition of each of the above-mentioned various antioxidants is not particularly restricted but, for the purpose of producing favorable effects on the mechanical properties of the cured products, it is preferably not lower than 0.01 part, more preferably not lower than 0.05 part, per 100 parts of the sum of the component (A) and the component (B) . The addition level is preferably not higher than 5. 0 parts, more preferably not higher than 3. 0 parts, still more preferably not higher than 2.0 parts.

<Plasticizer>

The curable composition of the present invention can contain a plasticizer.

Examples of the plasticizer include phthalic acid esters, such as dibutyl phthalate, diheptyl phthalate, di(2-ethylhexyl) phthalate, and butylbenzyl phthalate; non-aromatic dibasic acid esters, such as dioctyl adipate and dioctyl sebacate; polyalkylene glycol esters, such as diethylene glycol dibenzoate and triethylene glycol dibenzoate; phosphoric acid esters, such as tricresyl phosphate and tributyl phosphate; chlorinated paraffins; hydrocarbon oils, such as alkyldiphenyl and partially hydrogenated terphenyl. These plasticizers can be used alone or in combination according to the purpose of controlling physical properties or quality. However, the plasticizer is not necessarily required. The plasticizer can be added in production of the polymer.

The level of addition of the plasticizer is preferably 5 to 800 parts per 100 parts of the sum of the component (A) and the component (B) from the viewpoints of elongation impartion, workability, prevention of bleeding out.

<Adhesiveness improver>

Also, the curable composition of the present invention may contain any one of various adhesiveness improvers for improving adhesiveness to various supports (plastic films and the like).

Examples of the adhesiveness improvers include alkylalkoxysilanes, such as methyltrimethoxysilane, dimethyldimethoxysilane, trimethylmethoxysilane, and n-propyltrimethoxysilane; alkylisopropenoxysilanes, such as dimethyldiisopropenoxysilane, methyltriisopropenoxysilane, and γ-glycidoxypropylmethyldiisopropenoxysilane; functional group-containing alkoxysilanes, such as γ-glycidoxypropylmethyldimethoxysilane, γ-glycidoxypropyltrimethoxysilane, vinyltrimethoxysilane, vinyldimethylmethoxysilane, γ-mercaptopropyltrimethoxysilane,γ -mercaptopropylmethyldimethoxysilane; silicone vanishes; and polysiloxanes.

The level of addition of the adhesiveness improver is preferably 0.1 to 20 parts per 100 parts of the sum of the component (A) and the component (B) from the viewpoints of the balance between mechanical property (elongation and strength) of the cured product and adhesiveness.

<Preparation of curable composition>

The curable composition of the invention can be prepared in a hermetically sealed one-pack form comprising all the components and ingredients compounded in advance. It can also be prepared in a two-pack form comprising an initiator-free liquid composition A and a liquid composition B composed of an initiator or initiators blended with a filler, plasticizer and/or solvent, among others, both the compositions being intended to be mixed up just prior to molding.

<<Cured product>>

<Curing process>

The curing of the curable composition of the invention is carried out using a combination of photoradical curing and photocation curing. Specifically, the curable composition of the invention can be cured by active energy rays such as UV or electron beams.

<Curing with active energy ray>

A source of the active energy rays is not particularly limited, but light or electron beams are applied using a high-pressure mercury lamp, a low-pressure mercury lamp, an electron beam irradiation device, a halogen lamp, a light-emitting diode, or a semiconductor laser etc. depending on the property of the photopolymerization initiator, for example.

«Uses»

The photoradical- and photocation-curable composition of the invention can suitably be used, by curing, in such fields of application as sealants for buildings and vehicles, gaskets, adhesives, inks, paints, coatings, liquid crystal sealants, and electric or electronic parts, etc.

(Effect of the invention)

The photoradical- and photocation-curable composition of the invention is low in viscosity and shows good curability. In particular, when an acrylic polymer is used as the vinyl polymer, the composition can give cured products having the characteristic features of the acrylic polymer, namely good thermal stability, weathering resistance and oil resistance, among others, and showing good strength characteristics upon curing.

BEST MODE FOR CARRYING OUT THE INVENTION

Although examples of the present invention will be described below for explaining the invention in detail, the present invention is not limited to these examples.

In the examples below, "the number-average molecular weight" and "the molecular weight distribution (ratio of the weight-average molecular weight to the number-average molecular weight)" were calculated by a standard polystyrene calibration method using gel permeation chromatography (GPC). In GPC measurement, a polystyrene-crosslinked gel column (Shodex GPC K-804; manufactured by Showa Denko K. K.) and chloroform were used as a GPC column and a mobile solvent, respectively.

In the examples below, "the average number of terminal (meth)acryloyl groups" means "the numbers of (meth)acryloyl groups introduced per molecule of a polymer". The average number was determined by $^1H$ NMR analysis and the GPC number-average molecular weight.

In the examples and comparative examples below, "parts" represents "parts by weight".

[Comparative Production Example 1] (Synthesis of poly(n-butyl acrylate/ethyl acrylate/2-methoxyethyl acrylate) having acryloyl groups at both termini)

First, n-butyl acrylate, ethyl acrylate, and 2-methoxyethyl acrylate were polymerized at a molar ratio of 25/46/29 using cuprous bromide as a catalyst, pentamethyldiethylenetriamine as a ligand, and diethyl 2,5-dibromoadipate as an initiator to produce bromine-terminated poly(n-butyl acrylate/ethyl acrylate/2-methoxyethyl acrylate) having a number-average molecular weight of 16, 500 and a molecular weight distribution of 1.13.

Then, 400 g of the resultant polymer was dissolved in N,N-dimethylacetamide (400 mL), and 10.7 g of potassium acrylate was added to the resultant solution. The resulting mixture was heated and stirred at 70°C for 6 hours in a nitrogen atmosphere to produce a mixture of acryloyl group-terminated poly(n-butyl acrylate/ethyl acrylate/2-methoxyethyl acrylate) (referred to as "polymer [1]" hereinafter). Then, N,N-dimethylacetamide was distilled off from the mixture under reduced pressure, and toluene was added to the residue. The insoluble substance was filtered off, and toluene of the filtrate was distilled off under reduced pressure to purify polymer [1].

After the purification, polymer [1] having acryloyl groups at both termini had a number-average molecular weight of 16,900, a molecular weight distribution of 1.14, and an average number of terminal acryloyl groups of 1.8 (i.e. the introduction rate of acryloyl groups to a terminus was 90%) .

[Production Example 1]

The polymer [1] obtained in Comparative Production Example 1 was dried by heating under vacuum at 150°C for 3 hours to remove N atom-containing compounds so far contained in the polymer [1] to give a polymer [2].

[Production Example 2]

The polymer [1] obtained in Comparative Production Example 1 was dried by heating under vacuum at 150°C for 6 hours to remove N atom-containing compounds so far contained in the polymer [1] to give a polymer [3].

[Production Example 3]

To 100 parts of the polymer [1] obtained in Comparative Production Example 1 were added 100 parts of toluene and 1 part of Kyowaad 700 (acidic adsorbent, product of Kyowa Chemical Industry), the mixture was stirred with heating at 100°C for 3 hours and, thereafter, Radiolite 300 (adsorption aid, product of Showa Chemical Industry) was added and the insoluble matter was removed. The toluene was removed from the filtrate by distillation under reduced pressure to give a purified polymer [4].

[Example 1]

To 70 parts of the polymer [2] obtained in Production Example 1 were added 0.07 part of Irgacure 184 (1-hydroxycyclohexyl phenyl ketone, photoradical polymerization initiator, product of Ciba Specialty Chemicals), 0.035 part of Irgacure 819 (bis(2,4,6-trimethylbenzoyl)phenylphsophine oxide, photoradical polymerization initiator, product of Ciba Specialty Chemicals), 30 parts of Celloxide 2021P (3,4-epoxycyclohexylmethyl 3,4-epoxycyclohexanecarboxylate, alicyclic epoxy compound, product of Daicel Chemical Industries), 0.45 part (1.5 parts relative to Celloxide 2021P) of Optomer SP172 (tri(alkylphenyl)sulfonium hexafluoroantimonate, photocationic polymerization initiator, product of Asahi Denka Kogyo) and 1 part of Irganox 1010 (pentaerythritol tetrakis[3-(3,5-di-tert-butyl-4-hydroxyphenyl)propionate)], antioxidant, product of Ciba Specialty Chemicals), followed by thorough blending to give a curable composition. Then, the curable composition obtained was photoirradiated for 60 seconds using a metal halide lamp (80 W/cm, distance from irradiation source 15 cm) to give an about 2-mm-thick sheet-like cured product.

[Example 2]

To 70 parts of the polymer [4] obtained in Production Example 3 were added 0.07 part of Irgacure 184, 0.035 part of Irgacure 819, 30 parts of Celloxide 2021P, 0.45 part (1.5 parts relative to Celloxide 2021P) of Optomer SP172 and 1 part of Irganox 1010, followed by thorough blending to give a curable composition. Then, the curable composition obtained was photoirradiated for 60 seconds using a metal halide lamp (80 W/cm, distance from irradiation source 15 cm) to give an about 2-mm-thick sheet-like cured product.

[Example 3]

To 70 parts of the polymer [3] obtained in Production Example 2 were added 0.07 part of Darocure 1173 (2-hydroxy-2-methyl-1-phenylpropan-1-one, photoradical polymerization initiator, product of Ciba Specialty Chemicals), 0.035 part of Irgacure 819, 30 parts of Celloxide 2021P, 0.45 part (1.5 parts relative to Celloxide 2021P) of Optomer SP172 and 1 part of Irganox 1010, followed by thorough blending to give a curable composition. Then, the curable composition obtained was photoirradiated for 60 seconds using a metal halide lamp (80 W/cm, distance from irradiation source 15 cm) to give an about 2-mm-thick sheet-like cured product.

[Comparative Example 1]

To 100 parts of the polymer [1] obtained in Comparative Production Example 1 were added 0.1 part of Irgacure

184, 0.05 part of Irgacure 819, and 1 part of Irganox 1010, followed by thorough blending to give a curable composition. Then, the curable composition obtained was photoirradiated for 60 seconds using a metal halide lamp (80 W/cm, distance from irradiation source 15 cm) to give an about 2-mm-thick sheet-like cured product.

[Comparative Example 2]

To 100 parts of the polymer [1] obtained in Comparative Production Example 1 were added 0.1 part of Darocure 1173, 0.05 part of Irgacure 819, and 1 part of Irganox 1010, followed by thorough blending to give a curable composition. Then, the curable composition obtained was photoirradiated for 60 seconds using a metal halide lamp (80 W/cm, distance from irradiation source 15 cm) to give an about 2-mm-thick sheet-like cured product.

[Comparative Example 3]

To 70 parts of the polymer [1] obtained in Comparative Production Example 1 were added 0. 07 part of Irgacure 184, 0. 035 part of Irgacure 819, 30 parts of Celloxide 2021P, 0.45 part (1.5 parts relative to Celloxide 2021P) of Optomer SP172 and 1 part of Irganox 1010, followed by thorough blending to give a curable composition. Then, the curable composition obtained was photoirradiated for 60 seconds using a metal halide lamp (80 W/cm, distance from irradiation source 15 cm) to give an about 2-mm-thick sheet-like cured product. Curing of epoxy components in this curable composition was insufficient.

The N atom-containing compound concentration in each of the polymers [1] to [4] (each being component (A)) obtained in Comparative Production Example 1 and Production Examples 1 to 3 was determined by the method (1) described below. The N atom-containing compound concentration relative to each of the epoxy compounds (each being component (B)) used in Examples 1 to 3 and Comparative Example 3 was determined by the method (2) described below. The results are shown in Table 1.

<N atom-containing compound determinations>

(1) The N atom-containing compound concentration in each of the polymers [1] to [4] was determined by the working curve method, namely using a gas chromatograph (apparatus: GC-17A Gas Chromatograph; product of Shimadzu/column: Spelcowax-10, 30 m x 0.25 mm, 0.25 μm film; product of J&W Scientific) and measuring the peak(s) due to an amine and/or amide compound (s) as typical N atom-containing compound(s) in each polymer obtained in comparison with the peaks of reference samples. The diluent solvent used was toluene.

(2) The N atom-containing compound concentration in each of the polymers [1] to [4] relative to the epoxy compound was calculated using the formula given below. In the formula, (N atom-containing compound concentration in polymer) indicates the value obtained by the above-mentioned N atom-containing compound determination method (1).

N atom-containing compound concentration relative to epoxy compound = (N atom-containing compound concentration in polymer) x [(amount of obtained polymer incorporated (mass)) ÷ (amount of epoxy compound incorporated (mass))]

The sheet-like cured products obtained in the above examples and comparative examples were measured or evaluated for gel fraction, mechanical properties and residual tack by the methods described below. The results are respectively shown in Table 1.

<Gel fraction>

Each sheet-like cured product obtained was immersed in toluene at room temperature (23°C) for 24 hours, the change in weight between before and after immersion was measured, and the gel fraction (%) was calculated.

<Mechanical properties>

No. 2 dumbbell specimens were punched out from each sheet-like cured product obtained and subjected to tensile testing according to JIS K 7113 (measurement conditions: 23°C x 55% R.H., pulling rate 200 mm/min) using a

Shimadzu autograph. In Table 1, M100 indicates 100% modulus (strength at 100% elongation).

<Residual tack>

Each sheet-like cured product just after curing was evaluated for residual tack by touching with a finger.
The evaluation criteria are as follows.
Tack-free ← Excellent > Fair > Good > Bald → tacky

Table 1

| | | Ex.1 | Ex.2 | Ex.3 | Comp.Ex. 1 | Comp.Ex.2 | Comp Ex.3 |
|---|---|---|---|---|---|---|---|
| Component (A): polymer | | [2] | [4] | [3] | [1] | [1] | [1] |
| N atom-containing compound concentration in component (A) (ppm) | | 193 | 224 | 131 | 1200 | 1200 | 1200 |
| N atom-containing compound concentration relative to component (B) (ppm) | | 450 | 523 | 306 | | | 2800 |
| Gel fraction (%) | | 94 | 95 | 98 | 94 | 99 | 58 |
| Mechanical properties (No. 2 dumbbell) | M100(MPa) | - | - | - | - | - | 0.08 |
| | Breaking strength (MPa) | 2.37 | 1.51 | 5.27 | 0.68 | 0.51 | 0.09 |
| | Elongation (%) | 56 | 69 | 30 | 103 | 73 | 127 |
| IResidual tack | | Excellent | Excellent | Excellent | Fair | Fair | Bad |

The above results reveal that the curable compositions according to the invention in which the N atom-containing compound concentration is not higher than the specified level are excellent in curability and can provide sufficient mechanical properties.

INDUSTRIAL APPLICABILITY

The photoradical- and photocation-curable composition of the invention is low in viscosity and shows good curability. In particular, when an acrylic polymer is used as the vinyl polymer, the composition can give cured products having the characteristic features of the acrylic polymer, namely good thermal stability, weathering resistance and oil resistance, among others, and showing good strength characteristics upon curing.
The photoradical- and photocation-curable composition of the invention can suitably be used in such fields of application as sealants for buildings and vehicles, gaskets, adhesives, inks, paints, coatings, liquid crystal sealants, and electric or electronic parts, etc.

**Claims**

**1.** A photoradical- and photocation-curable composition which comprises:

(A) a vinyl polymer having, per molecule, two or more groups represented by the general formula (1):

$$-OC\ (O)\ C\ (R^a)\ =CH_2 \qquad (1)$$

wherein $R^a$ represents a hydrogen atom or an organic group containing 1 to 20 carbon atoms, at least one of which groups occurs at a molecular terminus, and
(B) an epoxy compound and/or oxetane compound and that the N atom-containing compound concentration in the component (A) is not higher than 1,000 ppm and the N atom-containing compound concentration relative

to the component (B) is not higher than 2,300 ppm.

2. The curable composition according to Claim 1
wherein the N atom-containing compound concentration in the component (A) is not higher than 500 ppm.

3. The curable composition according to Claim 1 or 2
wherein the main chain of the component (A) is a (meth)acrylic polymer.

4. The curable composition according to any one of Claims 1 to 3
wherein the main chain of the component (A) is an acrylate ester polymer.

5. The curable composition according to any one of Claims 1 to 4
wherein the vinyl monomer constituting the main chain of the component (A) comprises at least two monomers selected from among butyl acrylate, ethyl acrylate and 2-methoxyethyl acrylate.

6. The curable composition according to any one of Claims 1 to 5
wherein, in the component (A), $R^a$ in formula (1) is a hydrogen atom or a hydrocarbon group containing 1 to 20 carbon atoms.

7. The curable composition according to Claim 6
wherein, in the component (A), $R^a$ in formula (1) is a hydrogen atom or a methyl group.

8. The curable composition according to any one of Claims 1 to 7
wherein the main chain of the component (A) is produced by living radical polymerization of a vinyl monomer(s).

9. The curable composition according to Claim 8
wherein the living radical polymerization is carried out in the manner of atom transfer radical polymerization.

10. The curable composition according to Claim 9
wherein the atom transfer radical polymerization is carried out in the presence of a transition metal complex catalyst selected from among complexes of copper, nickel, ruthenium or iron.

11. The curable composition according to any one of Claims 1 to 10
wherein the main chain of the component (A) is produced by polymerization of a vinyl monomer (s) using a chain transfer agent.

12. The curable composition according to any one of Claims 1 to 11
wherein the component (A) has a number average molecular weight of not lower than 3,000.

13. The curable composition according to any one of Claims 1 to 12
wherein the (A) component vinyl polymer shows a weight average molecular weight/number average molecular weight ratio value of smaller than 1.8 as determined by gel permeation chromatography.

14. The curable composition according to any one of Claims 1 to 13
which contains a radical-polymerizable group-containing monomer and/or oligomer.

15. The curable composition according to any one of Claims 1 to 14
which contains an anionic polymerizable group-containing monomer and/or oligomer.

16. The curable composition according to Claim 14 or 15
which contains a (meth)acryloyl type group-containing monomer and/or oligomer.

17. The curable composition according to Claim 16
wherein the (meth) acryloyl type group-containing monomer and/or oligomer has a number average molecular weight of not higher than 5,000.

18. The curable composition according to any one of Claims 1 to 17
wherein the (B) component epoxy compound and/or oxetane compound has no aromatic ring.

19. The curable composition according to any one of Claims 1 to 18 which further comprises (C) a photoradical polymerization initiator and (D) a photocationic polymerization initiator.

20. The curable composition according to any one of Claims 1 to 19 which further comprises at least one compound (E) selected from the group consisting of epoxy group- and (meth)acryloyl type group-containing compounds, oxetane group- and (meth)acryloyl type group-containing compounds and epoxy group-, oxetane group- and (meth)acryloyl type group-containing compounds.

21. A curable composition according to Claim 20 wherein the component (E) is glycidyl methacrylate.

**Patentansprüche**

1. Fotoradikal- und Fotokation-härtbare Zusammensetzung, die umfasst:

   (A) ein Vinylpolymer, das pro Molekül zwei oder mehr Gruppen aufweist, die durch die allgemeine Formel (1) dargestellt werden:

   $$-OC(O)C(R^a)=CH_2 \qquad (1)$$

   wobei $R^a$ ein Wasserstoffatom oder eine organische Gruppe mit 1 bis 20 Kohlenstoffatomen darstellt, von denen wenigstens eine Gruppe an einem molekularen Ende auftritt, und
   (B) eine Epoxyverbindung und/oder Oxetanverbindung,
   wobei die N-Atom-haltige Verbindungskonzentration in der Komponente (A) nicht größer als 1.000 ppm ist und die N-Atom-haltige Verbindungskonzentration in Bezug auf die Komponente (B) nicht größer als 2.300 ppm ist.

2. Härtbare Zusammensetzung nach Anspruch 1, wobei die N-Atom-haltige Verbindungskonzentration in der Komponente (A) nicht größer als 500 ppm ist.

3. Härtbare Zusammensetzung nach Anspruch 1 oder 2, wobei die Hauptkette der Komponente (A) ein (Meth)Acrylpolymer ist.

4. Härtbare Zusammensetzung nach einem der Ansprüche 1 bis 3, wobei die Hauptkette der Komponente (A) ein Acrylatesterpolymer ist.

5. Härtbare Zusammensetzung nach einem der Ansprüche 1 bis 4, wobei das Vinylmonomer, das die Hauptkette der Komponente (A) bildet, wenigstens zwei Monomere umfasst, die aus Butylacrylat, Ethylacrylat und 2-Methoxyethylacrylat ausgewählt sind.

6. Härtbare Zusammensetzung nach einem der Ansprüche 1 bis 5, wobei in der Komponente (A) $R^a$ in Formel (1) ein Wasserstoffatom oder eine Kohlenwasserstoffgruppe mit 1 bis 20 Kohlenstoffatomen ist.

7. Härtbare Zusammensetzung nach Anspruch 6, wobei in der Komponente (A) $R^a$ in Formel (1) ein Wasserstoffatom oder eine Methylgruppe ist.

8. Härtbare Zusammensetzung nach einem der Ansprüche 1 bis 7, wobei die Hauptkette der Komponente (A) durch lebende Radikalpolymerisation eines Vinylmonomers hergestellt wird.

9. Härtbare Zusammensetzung nach Anspruch 8, wobei die lebende Radikalpolymerisation in der Weise einer Atomtransferradikalpolymerisation ausgeführt wird.

10. Härtbare Zusammensetzung nach Anspruch 9, wobei die Atomtransferradikalpolymerisation in der Gegenwart eines Übergangsmetallkomplexkatalysators ausgeführt wird, der aus Komplexen von Kupfer, Nickel, Ruthenium oder Eisen ausgewählt ist.

**11.** Härtbare Zusammensetzung nach einem der Ansprüche 1 bis 10,
wobei die Hauptkette der Komponente (A) durch Polymerisation eines Vinylmonomers mittels eines Kettentransferwirkstoffs hergestellt wird.

**12.** Härtbare Zusammensetzung nach einem der Ansprüche 1 bis 11,
wobei die Komponente (A) ein Zahlenmittel des Molekulargewichts von nicht weniger als 3.000 aufweist.

**13.** Härtbare Zusammensetzung nach einem der Ansprüche 1 bis 12,
wobei die (A)-Komponente Vinylpolymer ein Verhältnis von Gewichtsmittel des Molekulargewichts zum Zahlenmittel des Molekulargewichts von weniger als 1,8 aufweist, gemessen mittels Gelpermeationschromatografie.

**14.** Härtbare Zusammensetzung nach einem der Ansprüche 1 bis 13,
die ein eine radikalpolymerisierbare Gruppe enthaltendes Monomer und/oder Oligomer enthält.

**15.** Härtbare Zusammensetzung nach einem der Ansprüche 1 bis 14,
die ein eine anionisch polymerisierbare Gruppe enthaltendes Monomer und/oder Oligomer enthält.

**16.** Härtbare Zusammensetzung nach Anspruch 14 oder 15,
die ein eine (Meth)acryloylartige Gruppe enthaltendes Monomer und/oder Oligomer enthält.

**17.** Härtbare Zusammensetzung nach Anspruch 16,
wobei das eine (Meth)acryloylartige Gruppe enthaltende Monomer und/oder Oligomer ein Zahlenmittel des Molekulargewichts von nicht mehr als 5.000 aufweist.

**18.** Härtbare Zusammensetzung nach einem der Ansprüche 1 bis 17,
wobei die (B)-Komponente Epoxyverbindung und/oder Oxetanverbindung keinen aromatischen Ring aufweist.

**19.** Härtbare Zusammensetzung nach einem der Ansprüche 1 bis 18,
die ferner (C) einen Fotoradikalpolymerisationsinitiator und (D) einen Fotokationpolymerisationsinitiator umfasst.

**20.** Härtbare Zusammensetzung nach einem der Ansprüche 1 bis 19,
die ferner wenigstens eine Verbindung (E) umfasst, die aus der aus eine Epoxygruppe und (Meth)acryloylartige Gruppe enthaltenden Verbindungen, eine Oxetangruppe und (Meth)acryloylartige Gruppe enthaltenden Verbindungen und eine Epoxygruppe, Oxetangruppe und (Meth)acryloylartige Gruppe enthaltenden Verbindungen bestehenden Gruppe ausgewählt ist.

**21.** Härtbare Zusammensetzung nach Anspruch 20,
wobei die Komponente (E) Glycidylmethacrylat ist.

## Revendications

**1.** Composition photoradicalairement et photocationiquement durcissable :

laquelle comprend :

(A) un polymère vinylique présentant, par molécule, deux ou plusieurs groupes représentés par la formule générale (1) :

$$-OC(O)C(R^a)=CH_2 \qquad (1)$$

où $R^a$ représente un atome d'hydrogène ou un groupe organique contenant de 1 à 20 atomes de carbone, dont au moins un des groupes apparait à une terminaison moléculaire, et
(B) un composé époxy et/ou un composé oxétane et la concentration en composé contenant un atome N dans le constituant (A) n'est pas supérieure à 1 000 ppm et la concentration en composé contenant un atome N par rapport au constituant (B) n'est pas supérieure à 2 300 ppm.

**2.** Composition durcissable selon la revendication 1

dans laquelle la concentration en composé contenant un atome N dans le constituant (A) n'est pas supérieure à 500 ppm.

3. Composition durcissable selon la revendication 1 ou la revendication 2
dans laquelle la chaîne principale du constituant (A) est un polymère (méth)acrylique.

4. Composition durcissable selon l'une quelconque des revendications 1 à 3
dans laquelle la chaîne principale du constituant (A) est un polymère d'ester d'acrylate.

5. Composition durcissable selon l'une quelconque des revendications 1 à 4
dans laquelle le monomère vinylique constituant la chaîne principale du constituant (A) comprend au moins deux monomères choisis parmi l'acrylate de butyle, l'acrylate d'éthyle et l'acrylate de 2-méthoxyéthyle.

6. Composition durcissable selon l'une quelconque des revendications 1 à 5
dans laquelle, dans le constituant (A), $R^a$ dans la formule (1) est un atome d'hydrogène ou un groupe hydrocarboné contenant de 1 à 20 atomes de carbone.

7. Composition durcissable selon la revendication 6
dans laquelle, dans le constituant (A), $R^a$ dans la formule (1) est un atome d'hydrogène ou un groupe méthyle.

8. Composition durcissable selon l'une quelconque des revendications 1 à 7
dans laquelle la chaîne principale du constituant (A) est produite par polymérisation radicalaire vivante d'un(de) monomère(s) vinylique(s).

9. Composition durcissable selon la revendication 8
dans laquelle la polymérisation radicalaire vivante est réalisée dans la manière d'une polymérisation radicalaire par transfert d'atomes.

10. Composition durcissable selon la revendication 9
dans laquelle la polymérisation radicalaire par transfert d'atomes est réalisée en présence d'un catalyseur de complexe de métal de transition choisi parmi des complexes de cuivre, de nickel, de ruthénium ou de fer.

11. Composition durcissable selon l'une quelconque des revendications 1 à 10
dans laquelle la chaîne principale du constituant (A) est produite par polymérisation d'un(de) monomère(s) vinylique(s) utilisant un agent de transfert de chaîne.

12. Composition durcissable selon l'une quelconque des revendications 1 à 11,
dans laquelle le constituant (A) présente une masse moléculaire moyenne en nombre qui n'est pas inférieure à 3 000.

13. Composition durcissable selon l'une quelconque des revendications 1 à 12
dans laquelle le polymère vinylique de constituant (A) présente un rapport masse moléculaire moyenne en masse/masse moléculaire moyenne en nombre d'une valeur inférieure à 1,8 comme déterminée par chromatographie par perméation sur gel.

14. Composition durcissable selon l'une quelconque des revendications 1 à 13
laquelle contient un monomère et/ou un oligomère contenant un groupe radicalairement polymérisable.

15. Composition durcissable selon l'une quelconque des revendications 1 à 14
laquelle contient un monomère et/ou oligomère contenant un groupe polymérisable anionique.

16. Composition durcissable selon la revendication 14 ou 15
laquelle contient un monomère et/ou oligomère contenant un groupe de type (méth)acryloyle.

17. Composition durcissable selon la revendication 16
dans laquelle le monomère et/ou oligomère contenant un groupe de type (méth)acryloyle présente une masse moléculaire moyenne en nombre qui n'est pas supérieure à 5 000.

18. Composition durcissable selon l'une quelconque des revendications 1 à 17

dans laquelle le composé époxy et/ou composé oxétane de constituant (B) ne présente pas de cycle aromatique.

**19.** Composition durcissable selon l'une quelconque des revendications 1 à 18
laquelle comprend de plus (C) un initiateur de polymérisation photoradicalaire et (D) un initiateur de polymérisation photocationique.

**20.** Composition durcissable selon l'une quelconque des revendications 1 à 19
laquelle comprend de plus au moins un composé (E) choisi dans le groupe constitué de composés contenant un groupe époxy et un groupe de type (méth)acryloyle, de composés contenant un groupe oxétane et un groupe de type (méth)acryloyle et de composés contenant un groupe époxy, un groupe oxétane, et un groupe de type (méth)acryloyle.

**21.** Composition durcissable selon la revendication 20,
dans laquelle le constituant (E) est le méthacrylate de glycidyle.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000154370 A
- JP 2000072816 A
- JP 2000095826 A
- JP HEI05117592 B
- JP HEI08143755 B
- WO 9630421 A
- WO 9718247 A
- JP HEI04132706 B
- JP SHO61271306 B
- JP 2594402 B
- JP SHO5447782 B
- JP HEI03111402 B
- JP HEI05194619 B


### Non-patent literature cited in the description


- *Journal of American Chemical Society,* 1994, vol. 116, 7943
- *Macromolecules,* 1994, vol. 27, 7228
- **MATYJASZEWSKI et al.** *Journal of American Chemical Society,* 1995, vol. 117, 5614
- *Macromolecules,* 1995, vol. 28, 7901
- *Science,* 1996, vol. 272, 866
- **SAWAMOTO et al.** *Macromolecules,* 1995, vol. 28, 1721
- *Macromolecules,* 1995, vol. 28, 2993
- Antioxidant Handbook. Taisei Corporation
- Deterioration and Stabilization of Polymer Material. CMC Chemical, 235-242